# EUROPEAN PATENT APPLICATION

(11) **EP 4 564 505 A1**
(43) Date of publication of application: **04.06.2025**
(21) Application number: 24196617.5
(22) Date of filing: 27.08.2024
(51) Int. Cl.: H01M 10/0525, H01M 10/0565, H01M 10/0569

(54) **GEL POLYMER ELECTROLYTE FOR LITHIUM BATTERY AND LITHIUM BATTERY INCLUDING THE SAME**

(30) Priority: 01.12.2023 KR 20230172613; 17.05.2024 KR 20240064796
(71) Applicant: Samsung SDI Co., Ltd, Gyeonggi-do 17084 (KR)
(72) Inventor: Bae, Woojin, 17084 Gyeonggi-do (KR); Lee, Kanghee, 17084 Gyeonggi-do (KR); Moon, Jongseok, 17084 Gyeonggi-do (KR); Kim, Heemin, 17084 Gyeonggi-do (KR); Park, Jongseok, 17084 Gyeonggi-do (KR); Woo, Hyunsik, 17084 Gyeonggi-do (KR); Shin, Juhun, 17084 Gyeonggi-do (KR); Hong, Donggi, 17084 Gyeonggi-do (KR); Pyo, Sujin, 17084 Gyeonggi-do (KR)
(74) Representative: Michalski Hüttermann & Partner Patentanwälte mbB

(57) **Abstract**

A gel polymer electrolyte for a lithium battery, a lithium battery including the gel polymer electrolyte, and a method of manufacturing the lithium battery are provided. The gel polymer electrolyte includes a gel polymer and a liquid electrolyte, and the gel polymer is a crosslinked product of i) a multifunctional acrylic first polymerizable monomer including three or more polymerizable functional groups and ii) a second polymerizable monomer including a perfluoropolyoxyalkylene (PFPE) unit and two or more polymerizable functional groups.

## Description

### CROSS-REFERENCE TO RELATED APPLICATION

The present application claims priority to and the benefit of Korean Patent Application Nos. 10-2023-0172613, filed on December 1, 2023, and 10-2024-0064796 filed on May 17, 2024 in the Korean Intellectual Property Office, the entire content of which is incorporated herein by reference in its entirety.

### BACKGROUND

### 1. Field

One or more embodiments of the present disclosure relate to a gel polymer electrolyte for a lithium battery and a lithium battery including the same.

### 2. Description of the Related Art

Due to safety issues or concerns of liquid electrolytes currently utilized in lithium-ion batteries or lithium batteries, research has been conducted on semisolid or all-solid polymer electrolytes as desired or important substitutes for the liquid electrolytes.

A gel polymer electrolyte refers to a gel-type or kind semisolid electrolyte in a state of a polymer solid electrolyte including a liquid and may be manufactured in the form of a free-standing film or by a method of injecting together with an electrolytic solution and then curing. Such a gel polymer electrolyte (GPE) may have improved stability although capacity may decrease due to increased resistance as compared to pure liquid electrolytes.

Also, due to high viscosity of a gel polymer electrolyte-forming composition in the manufacture of a gel polymer electrolyte, a positive electrode of the lithium battery may not be easily impregnated with the gel polymer electrolyte. Thus, if the positive electrode having a high loading amount is utilized, charging and discharging characteristics of the lithium battery may deteriorate.

### SUMMARY

One or more aspects of embodiments of the present disclosure are directed toward a gel polymer electrolyte for a lithium battery having improved ionic conductivity.

One or more aspects of embodiments of the present disclosure are directed toward a lithium battery having improved cycle characteristics by including the gel polymer electrolyte.

Additional aspects will be set forth in part in the description which follows and, in part, will be apparent from the description, or may be learned by practice of the presented embodiments of the present disclosure.

According to one or more embodiments of the present disclosure, a gel polymer electrolyte for a lithium battery includes
a gel polymer and a liquid electrolyte,
wherein the liquid electrolyte includes a lithium salt and an organic solvent, and the gel polymer is a crosslinked product of i) a multifunctional acrylic first polymerizable monomer including three or more polymerizable functional groups, and ii) a second polymerizable monomer including a perfluoropolyoxyalkylene (PFPE) unit and two or more polymerizable functional groups.

According to one or more embodiments of the present disclosure, a lithium battery includes a positive electrode, a negative current collector, and an electrolyte layer between the positive electrode and the negative current collector,
wherein the electrolyte layer includes the gel polymer electrolyte.

In one or more embodiments, the lithium battery may further include a lithium metal layer between the negative current collector and the electrolyte layer, wherein the lithium metal layer may include a lithium metal foil, lithium metal powder, a lithium alloy foil, lithium alloy powder, and/or any combination thereof.

The electrolyte layer may include a separator, wherein the separator may include a porous substrate. The porous substrate may be a porous film, wherein the porous film may be a woven or non-woven fabric,
wherein the porous substrate may include an olefin resin, a fluorine resin, an ester resin, an imide resin, an acrylic resin, a cellulose resin, and/or any combination thereof.

The olefin resin may include polyethylene, polypropylene, and/or any combination thereof. The fluorine resin may include polyvinylidene fluoride, polytetrafluoroethylene, and/or any combination thereof. The ester resin may include polyethyleneterephthalate, polybutyleneterephthalate, and/or any combination thereof. The imide resin may include polyamideimide, polyetherimide, and/or any combination thereof.

The acrylic resin may include polyacrylonitrile, polyacrylate, and/or any combination thereof. The cellulose resin may include carboxymethylcellulose, microbial cellulose, plant cellulose, animal cellulose, and/or any combination thereof.

The negative current collector may include copper (Cu), nickel (Ni), Ni-coated Cu, stainless steel (SUS), iron (Fe), cobalt (Co), or an alloy thereof. The lithium battery may include a negative active material layer, a protective layer, and/or any combination thereof between the negative current collector and the electrolyte layer.

### BRIEF DESCRIPTION OF DRAWINGS

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the present disclosure will be more apparent from the following description taken in conjunction with the accompanying drawings, in which:
FIG. 1 is a view for describing a stack structure of a lithium battery according to one or more embodiments of the present disclosure;
FIG. 2 is a view for describing a stack structure of a lithium battery according to one or more embodiments of the present disclosure;
FIG. 3 is a schematic diagram of a lithium battery according to one or more embodiments of the present disclosure;
FIG. 4 is a schematic diagram of a lithium battery according to one or more embodiments of the present disclosure;
FIG. 5 is a schematic diagram of a lithium battery according to one or more embodiments of the present disclosure;
FIG. 6 is a graph illustrating viscosity of gel polymer electrolyte-forming compositions of Examples 1 and 2 and Comparative Examples 1, 3 and 4; and
FIG. 7 is a graph illustrating rate characteristics of lithium batteries of Example 3 and Comparative Example 3.

### DETAILED DESCRIPTION

Reference will now be made in more detail to one or more embodiments, examples of which are illustrated in the accompanying drawings, wherein like reference numerals refer to like elements throughout the present disclosure, and duplicative descriptions thereof may not be provided for conciseness. In this regard, the embodiments of the present disclosure may have different forms and should not be construed as being limited to the descriptions set forth herein. For example, one or more embodiments are merely described in more detail, by referring to the drawings, to explain aspects of the present disclosure. As utilized herein, the term "and/or" may include any and all combinations of one or more of the associated listed items. Expressions such as "at least one of," "one of," and "selected from," if preceding a list of elements, modify the entire list of elements and do not modify the individual elements of the list. For example, "at least one of a, b or c", "at least one selected from among a, b, and c", "at least one selected from among a to c", etc., may indicates only a, only b, only c, both (e.g., simultaneously) a and b, both (e.g., simultaneously) a and c, both (e.g., simultaneously) b and c, all of a, b, and c, or variations thereof.

The present disclosure described in more detail hereinafter allows one or more suitable changes and numerous embodiments, particular embodiments will be illustrated in the drawings and described in more detail in the written description. However, this is not intended to limit the present disclosure to particular modes of practice, and it is to be appreciated that all modifications, equivalents, and substitutes that do not depart from the spirit and technical scope of the present disclosure are encompassed in the present disclosure.

The terms utilized herein are merely utilized to describe particular embodiments and are not intended to limit the present disclosure. The singular forms "a," "an," "one," and "the" as utilized herein are intended to include the plural forms as well, unless the context clearly indicates otherwise. In the present disclosure, it is to be understood that the terms such as "comprise(s)/comprising," "include(s)/including," or "have(has)/having" and/or the like., are intended to indicate the existence of the features, numbers, processes, operations, elements, parts, components, materials, and/or a (e.g., any suitable) combination thereof disclosed in the disclosure, and are not intended to preclude the possibility that one or more other features, numbers, processes, operations, elements, parts, components, materials, and/or one or more (e.g., any suitable) combinations thereof may exist or may be added. As utilized herein, the "/" may be interpreted as either "and" or "or" depending on situations. Further, the use of "may" when describing embodiments of the present disclosure refers to "one or more embodiments of the present disclosure".

In the drawings, thicknesses of one or more suitable layers and regions may be enlarged or reduced for clarity. Throughout the present disclosure, like reference numerals denote like elements. Throughout the disclosure, it will be understood that if (e.g., when) one element such as layer, film, region, or plate, is referred to as being "on" another element, it may be directly on the other element, or intervening elements may also be present therebetween. In contrast, when a component is referred to as being "directly on" another component, there is no intervening component therebetween. Although the terms "first," "second," and/or the like. may be utilized herein to describe one or more suitable components, these components should not be limited by these terms. These terms are only utilized to distinguish one component from another. In the disclosure and drawings, components having substantially the same functional configuration are referred to by the same reference numerals, and redundant descriptions are not provided for conciseness.

Unless otherwise stated in the disclosure, it will be understood that if (e.g., when) one element such as layer, film, region, or plate, is referred to as being "on" another element, it may be directly on the other element, or intervening elements may also be present therebetween.

Unless otherwise stated in the specification, an expression utilized in the singular may encompass the expression of the plural. Unless otherwise stated, the term "A or B" may refer to "including A, including B, or including both (e.g., simultaneously) A and B".

As utilized herein, the term " a combination thereof," or "any combination thereof" may refer to a mixture, a stack structure, a composite, a copolymer, an alloy, a blend, and/or a reaction product of referents.

Throughout the present disclosure, a particle diameter may be an average particle diameter, unless otherwise defined. The particle diameter may refer to an average particle diameter (D50) indicating a particle diameter corresponding to 50 % of cumulative volume of the particles in a cumulative size distribution curve. The D50 may be measured by any method well suitable in the art, for example, utilizing a particle size analyzer, or utilizing a transmission electron microscope (TEM) or a scanning electron microscope (SEM). In one or more embodiments, the D50 value may be obtained by measuring diameters of particles by dynamic light-scattering, counting the number of particles belonging to each particle diameter range via data analysis, and calculating the results. D50 may also be measured by a laser diffraction method. By the laser diffraction method, dispersing particles to be measured may be dispersed in a dispersion medium, and ultrasonic waves of about 28 kHz were emitted at an output of 60 W utilizing a commercially available laser diffraction particle diameter measuring device (e.g., MT 3000 manufactured by Microtrac), and then an average particle diameter (D50) may be calculated based on 50 % cumulative volume in a particle size distribution obtained by the measuring device.

In the present disclosure, the "particle diameter" or "particle size" of particles may indicate an average diameter of spherical particles or an average length of major axes of non-spherical particles. Particle diameters/sizes of particles may be measured utilizing a particle size analyzer (PSA). The "particle diameter" or "particle size" of particles may be, for example, an average particle diameter. The average particle diameter may be, for example, a median particle diameter (D50). The median particle diameter D50 may be a particle diameter corresponding to a 50% cumulative volume calculated from the smallest particle to the largest particle in a particle size distribution measured, for example, by a laser diffraction method. The average diameters and average lengths of major axes of particles may be measured by utilizing a scanning electron microscope (SEM). If measured by utilizing an SEM, an average value of more than 30 randomly selected particles having a diameter of 1 micron (µm) or more, excluding fine particles, may be utilized.

In the present disclosure, the term "metal" may include metals and metalloids such as silicon and germanium in an elemental or ionic state, and the term "alloy" may refer to a mixture of two or more metals.

In the present disclosure, the term "positive active material" may refer to a material for positive electrodes allowing lithiation and delithiation, and the term "negative active material" may refer to a material for negative electrodes allowing lithiation and delithiation.

In the present disclosure, the terms "lithiation" and "lithiating" may refer to a process of adding lithium to a positive active material or a negative active material, and the terms "delithiation" and "delithiating" may refer to a process of removing lithium from a positive active material or a negative active material.

In the present disclosure, the terms "charging" and "charge" may refer to a process of supplying electrochemical energy to a battery, and the terms "discharging" and "discharge" may refer to a process of removing electrochemical energy from a battery.

In the present disclosure, the terms "cathode" and "positive electrode" may refer to an electrode in which electrochemical reduction and lithiation occur during discharging, and the terms "anode" and "negative electrode" may refer to an electrode in which electrochemical oxidation and delithiation occur during discharging.

The term "length", "thickness", and "width" as utilized herein refers to, for example, an average length, an average thickness, and an average width respectively. The length, thickness, and width are measured utilizing software from a scanning electron microscope image. Hereinafter, a gel polymer electrolyte for a lithium battery, a lithium battery including the gel polymer electrolyte, and a method of manufacturing the gel polymer electrolyte according to one or more embodiments will be described in more detail.

A gel polymer electrolyte refers to a gel-type or kind semisolid electrolyte in a state of a polymer solid electrolyte including a liquid and may be manufactured in the form of a free standing film or by a method of injecting together with an electrolytic solution and curing. Such a gel polymer electrolyte (GPE) may have improved stability although capacity may decrease due to an increased resistance compared to pure liquid electrolytes (LE).

However, if the gel polymer electrolyte is manufactured in the form of a free standing film, a positive electrode may not be easily impregnated therewith, and thus charging and discharging characteristics of the positive electrode may deteriorate in the event of utilizing a positive electrode having a high loading amount. If the gel polymer electrolyte is manufacturing by simultaneous injecting a liquid electrolyte and a crosslinking agent and curing, viscosity of a gel polymer electrolyte-forming composition may increase according to components of the crosslinking agent, making it difficult to obtain sufficient impregnation of a positive electrode.

To solve the above-described problems, the present disclosure provides a gel polymer electrolyte for a lithium battery including a gel polymer and a liquid electrolyte according to one or more embodiments. The liquid electrolyte may include a lithium salt and an organic solvent, and the gel polymer may be a crosslinked product of i) a multifunctional acrylic first polymerizable monomer including three or more polymerizable functional groups and ii) a second polymerizable monomer including a perfluoropolyoxyalkylene (PFPE) unit and two or more polymerizable functional groups.

By appropriately or suitably adjusting viscosity of a gel polymer electrolyte-forming composition utilized to manufacture the gel polymer electrolyte, a positive electrode even having a high loading amount may be easily impregnated with the gel polymer electrolyte of one or more embodiments. The gel polymer, as a crosslinked product of the first polymerizable monomer and the second polymerizable monomer as described above, may have strong lithium cation interaction and anion interaction. As a result, a lithium battery including the gel polymer electrolyte may have improved ionic conductivity, lifespan characteristics, and high-rate characteristics.

As utilized herein, the terms "first polymerizable monomer" and "second polymerizable monomer" may also be termed "first crosslinkable monomer" and "second crosslinkable monomer", respectively.

The multifunctional acrylic first polymerizable monomer including three or more polymerizable functional groups, as the first polymerizable monomer, may include, for example, 3 to 6 polymerizable functional groups. If the multifunctional acrylic first polymerizable monomer includes three or more polymerizable functional groups, the gel polymer electrolyte having excellent or suitable physical properties may be obtained. The first polymerizable monomer may be, for example, trimethylolpropane triacrylate, trimethylolpropane trimethacrylate, trimethylolpropane ethoxylate triacrylate, trimethylolpropane propoxylate triacrylate, ditrimethylolpropane tetraacrylate, pentaerythritol triacrylate, pentaerythritol tetraacrylate, pentaerythritol ethoxylate tetraacrylate, dipentaerythritol pentaacrylate, dipentaerythritol hexaacrylate(DPHA), or any combination thereof.

If the multifunctional acrylic first polymerizable monomer is utilized as the first polymerizable monomer, the monomer may serve as a diluent in the liquid electrolyte, and thus viscosity of the gel polymer electrolyte-forming composition may decrease. In one or more embodiments, the gel polymer electrolyte-forming composition may have a viscosity of about 2 centipoise (cps) to about 20 cps. Therefore, the composition having a viscosity within the range may be easily injected into a battery assembly.

An ester group (COO-) of the first polymerizable monomer may play a role in holding Li salts and anions. By utilizing this effect, anions may also be induced to migrate together with lithium ions from a positive electrode to a negative electrode during initial charging. As a result, more anions may be induced to be present in the negative electrode, which enriches a clustered solvation structure, resulting in formation of a strong film. For example, if a fluorine-containing borate-based lithium salt is utilized as the lithium salt, a strong film including abundant boron and fluorine (F) ions, as anions, may be formed.

The second polymerizable monomer including a perfluoropolyoxyalkylene (PFPE) unit and two or more polymerizable functional groups may provide the aspect of improving ionic conductivity of the gel polymer electrolyte by including the PFPE unit, and may also improve oxidation stability to enhance high-voltage stability compared to utilizing a polymerizable monomer not including the PFPE unit.

By utilizing the first polymerizable monomer and the second polymerizable monomer according to the present disclosure, processibility may be obtained by reducing viscosity of the gel polymer electrolyte composition.

According to one embodiment, the second polymerizable monomer has, for example, 2 or more, 3 or more, or 4 or more polymerizable functional groups. According to another embodiment, the number of polymerizable functional groups in the second polymerizable monomer is, for example, 2 to 4, or 3 to 4.

The second polymerizable monomer, as a crosslinking agent, may have excellent or suitable ionic conductivity by including a perfluoroether unit and may be, for example, a compound represented by Formula 1, a compound represented by Formula 2, or a (e.g., any suitable) combination thereof.

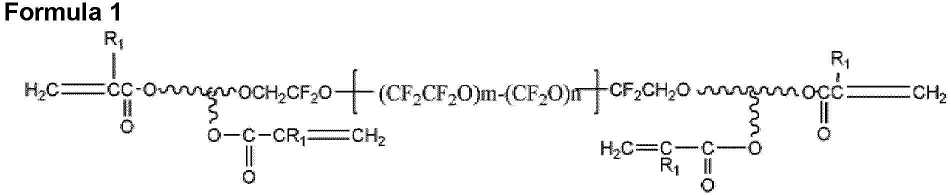

In Formula 1, R₁ may be hydrogen or a C1-C6 alkyl group, m and n may each independently be an integer greater than 0, and a sum of m and n may be in a range of 2 to about 300 or 2 to about 100. For example, in one or more embodiments, m may be an integer in a range of to about 150 or from 1 to about 100, and n may be an integer in a range of 1 to about 150 or from 1 to about 100.

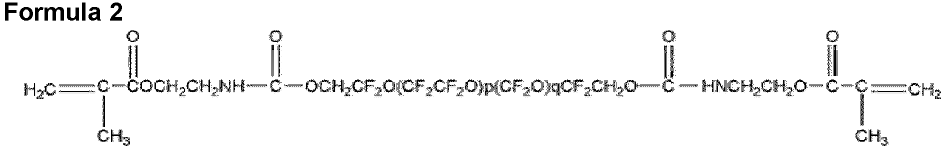

In Formula 2, p and q may each independently be an integer greater than 0, a sum of p and q may be in a range of 2 to about 300 or 1 to about 100, p may be an integer in a range of 1 to about 150 or 1 to 100, and q may be an integer in a range of 1 to about 150 or 1 to about 100.

In one or more embodiments, the compounds represented by Formula 1 or 2 may have a weight average molecular weight of about 400 to about 10,000, about 400 to about 5,000, or about 500 to about 3,000. In one or more embodiments, in the polymerizable monomer including the PFPE unit and two or more polymerizable functional groups, the number of polymerizable functional groups may be 3 or more or 4 or more. In some embodiments, the compound of Formula 1 may include four (meth)acrylic groups, which are cross-linkable functional groups, may form a network capable of trapping a large amount of a liquid even at a smaller amount in comparison with utilizing a compound including a smaller number of crosslinkable functional groups.

In one or more embodiments, the compound of Formula 1 includes four (meth)acrylic groups. As lithium ion interaction and anion interaction increase, a lithium battery may have excellent or suitable lifespan characteristics.

According to one embodiment, the second polymerizable monomer has, for example, 2 or more, 3 or more, or 4 or more polymerizable functional groups. According to another embodiment, the number of polymerizable functional groups in the second polymerizable monomer is, for example, 2 to 4, or 3 to 4.

In one or more embodiments, the second polymerizable monomer may be, for example, a compound represented by Formula 3, a compound represented by Formula 4, or a (e.g., any suitable) combination thereof.

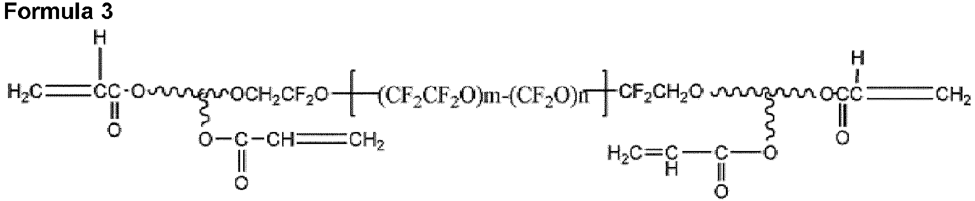

In Formula 3, m may be an integer in a range of 1 to about 150, n may be an integer in a range of 1 to about 150, and a sum of m and n may be in a range of 2 to about 300.

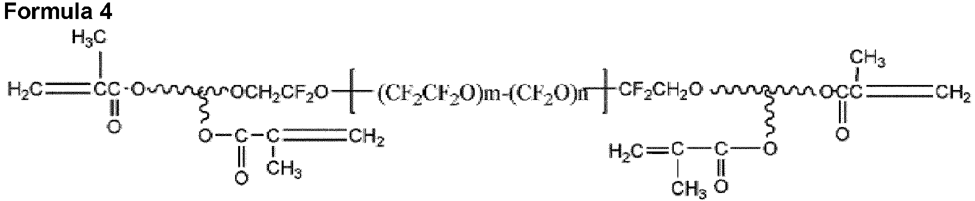

In Formula 4, m may be an integer in a range of 1 to about 150, n may be an integer in a range of 1 to about 150, and a sum of m and n may be from 2 to about 300.

The gel polymer electrolyte may trap a liquid in a polymer matrix to form a semisolid phase. A monomer having higher affinity with lithium ions and higher affinity with anions more may improve lifespan characteristics of the lithium battery after a gel polymer electrolyte is prepared. This is because lithium ions may easily migrate via a polymer chain after polymerization.

In one or more embodiments, a weight ratio of the first polymerizable monomer to the second polymerizable monomer may be, for example, from about 1:9 to about 9:1. In one or more embodiments, a weight ratio of the first polymerizable monomer to the second polymerizable monomer may be, for example, from about 5:1 to about 1:1 or from about 3:1 to about 1:1. If the weight ratio of the first polymerizable monomer to the second polymerizable monomer is within the ranges, the gel polymer electrolyte having excellent or suitable ionic conductivity and physical properties may be formed. In one or more embodiments, a mixing weight ratio of the gel polymer to the liquid electrolyte may be from about 1:99 to about 99:1.

The gel polymer, as a crosslinked product of the first polymerizable monomer and the second polymerizable monomer, may have very strong interaction with cations such as Li⁺ and anions such as PF₆⁻.

In one or more embodiments, the liquid electrolyte may further include a nitrile-based compound. The nitrile-based compound may include at least one selected from among succinonitrile (SN), adiponitrile (1,4-dicyanobutane or 1,6-hexanedinitrile), dicyanobutene (DCB), ethyleneglycolbis(propionitrile)ether, hexanetricarbonitrile (HTCN), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile. An amount of the nitrile-based compound may be from about 1 parts by weight to about 5 parts by weight based on 100 parts by weight of a total weight of the gel polymer electrolyte. By utilizing the nitrile-based compound, the gel polymer electrolyte having excellent or suitable stability at a high voltage and improved ionic conductivity may be manufactured.

The liquid electrolyte may include a lithium salt and a non-aqueous organic solvent. The non-aqueous organic solvent may serve as a medium through which ions involved in electrochemical reaction of a battery may migrate. The non-aqueous organic solvent may be a carbonate-based solvent, an ester-based solvent, an ether-based solvent, a ketone-based solvent, an alcohol-based solvent, an aprotic solvent, or any combination thereof.

As the carbonate-based solvent, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like may be utilized.

As the ester-based solvent, methyl acetate, ethyl acetate, n-propyl acetate, dimethylacetate, methylpropionate, ethylpropionate, decanolide, mevalonolactone, valerolactone, caprolactone, and/or the like may be utilized.

As the ether-based solvent, dibutyl ether, tetraglyme, diglyme, dimethoxyethane, 2-methyltetrahydrofuran, 2,5-dimethyltetrahydrofuran, and/or tetrahydrofuran may be utilized. For example, as the ketone-based solvent, cyclohexanone, and/or the like may be utilized. As the alcohol-based solvent, ethyl alcohol, isopropyl alcohol, and/or the like may be utilized. As the aprotic solvents, nitriles such as R-CN (wherein R may be a linear, branched, or cyclic C2-C20 hydrocarbon group and may include a double bond, an aromatic ring, or an ether group); amides such as dimethylformamide; dioxolanes such as 1,3-dioxolane and 1,4-dioxolane; and/or sulfolane may be utilized.

The non-aqueous organic solvent may be utilized alone or in a combination of at least two thereof.

For example, if a carbonate-based solvent is utilized, a mixture of a cyclic carbonate and a chain carbonate may be utilized, and the cyclic carbonate may be mixed with the chain carbonate in a volume ratio of about 1:1 to about 1:9.

The lithium salt may be a material dissolved in the non-aqueous organic solvent to serve as a source of lithium ions in a battery enabling a basic operation of a lithium secondary battery and promoting migration of lithium ions between a positive electrode and a negative electrode. Non-limiting examples of the lithium salt may include one or more selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, lithium bis(fluorosulfonyl)imide (Li(FSO₂)₂N, LiFSI), LiC₄F₉SO₃, LiN(CₓF₂ₓ₊₁SO₂)(C_{y}F_{2y+1}SO₂) (wherein x and y are an integer from 1 to 20, respectively), lithium trifluoromethane sulfonate, lithium tetrafluoroethanesulfonate, lithium difluorobis(oxalato)phosphate (LiDFBOP), lithium difluoro(oxalato)borate, and lithium bis(oxalato)borate (LiBOB). A concentration of the lithium salt may be, for example, from about 0.1 M to about 5.0 M or from about 0.3 M to about 4 M.

In one or more embodiments, the lithium salt may include a first lithium salt and a second lithium salt.

The gel polymer electrolyte may have improved ionic conductivity by including the first lithium salt and the second lithium salt.

As the gel polymer electrolyte includes the first lithium salt and the second lithium salt, the ester group from the first polymerizable monomer may interact with lithium ions to more effectively modify a solvation structure of lithium ions. Aggregation of anions derived from the first lithium salt and the second lithium salt may increase, and inorganic components such as fluorine (F) derived from the aggregated anions during a charging and discharging process may modify the composition of a solid electrolyte interphase (SEI) layer, thereby improving cycle characteristics of the lithium battery.

The first lithium salt and the second lithium salt may each be a borate-based lithium salt. The borate-based lithium salt may have improved high-temperature stability compared to phosphorus-based lithium salts and may prevent or reduce formation of hydrofluoric acid (HF). If the first lithium salt and the second lithium salt includes a borate-based lithium salt, high-temperature cycle characteristics of the lithium battery may be improved.

In one or more embodiments, the first lithium salt and the second lithium salt may be, for example, each independently a fluorine-containing borate-based lithium salt. A composition of an SEI layer formed during charging and discharging of the lithium battery may be modified more effectively because the first lithium salt and the second lithium salt include the fluorine-containing borate-based lithium salts. For example, as an amount of fluorine (F) of the SEI layer increases, structural stability of the SEI layer may be improved, and side reactions with an organic solvent may be effectively inhibited or reduced. As a result, reversibility of electrode reaction of the lithium battery may be improved.

In one or more embodiments, the first lithium salt and the second lithium salt may be, for example, a non-cyclic borate lithium salt and a cyclic borate lithium salt, respectively. If the first lithium salt is a non-cyclic lithium salt, ionic conductivity of the gel polymer electrolyte may be improved more effectively. If the second lithium salt is a cyclic lithium salt, aggregation of anions may increase, and thus the composition of the SEI layer may be modified more effectively and high-temperature stability of the gel polymer electrolyte may be enhanced.

In the absence of the first lithium salt, ionic conductivity of the gel polymer electrolyte may decrease. In the absence of the second lithium salt, structural stability of the SEI layer may deteriorate.

The fluorine-containing borate-based lithium salt may include, for example, LiBF₄, LiBF₃(C₂F₅), a compound represented by one selected from among Formulae 5 to 16, and/or a (e.g., any suitable) combination thereof.

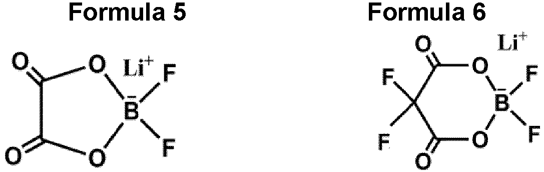

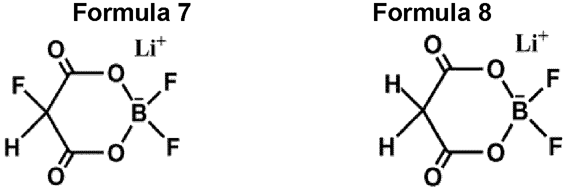

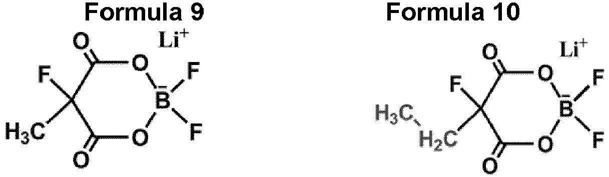

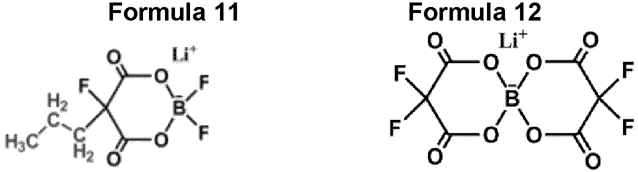

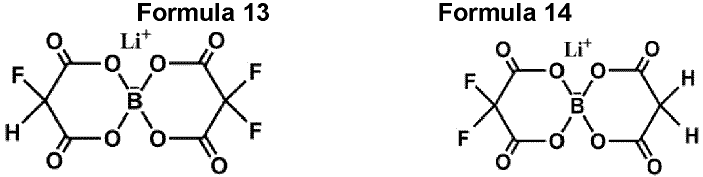

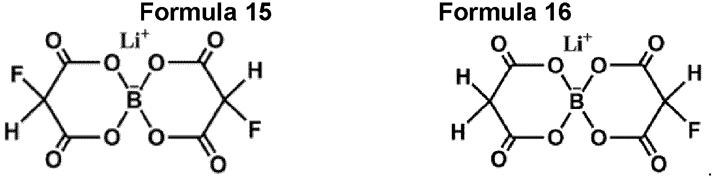

In one or more embodiments, the first lithium salt may include, for example, LiBF₄, and the second lithium salt may include a compound selected from among the compounds represented by Formulae 5 to 16.

In one or more embodiments, the first lithium salt may include LiBF₄, and the second lithium salt may include, for example,LiDFOB(lithium difluoro(oxalate)borate).

The gel polymer electrolyte may not include (e.g., may exclude), for example, a phosphorous-based lithium salt. If the gel polymer electrolyte does not include a phosphorous-based lithium salt, high-temperature stability of the gel polymer electrolyte may be improved, and formation of hydrofluoric acid (HF) may be inhibited or reduced.

The gel polymer electrolyte may not include (e.g., may exclude), for example, lithium bis(oxalato)borate (LiBOB). If the gel polymer electrolyte does not include LiBOB, ionic conductivity of the gel polymer electrolyte may further be improved, and solubility of the lithium salt in a carbonate solvent may further be improved.

In the gel polymer electrolyte, amounts of the first lithium salt and the second lithium salt may be, for example, each independently greater than 0 M but not more than to 1.2 M, for example, from about 0.1 M to about 1.0 M, or from about 0.4 M to about 0.8 M. If the amounts of the first lithium salt and the second lithium salt are each within the ranges described above, the gel polymer electrolyte may provide formation of an SEI layer having both (e.g., simultaneously) excellent or suitable ionic conductivity and structural stability.

In one or more embodiments, the amounts of the first lithium salt and the second lithium salt may be, for example, each independently greater than 0 M but not more than 1.2 M, for example, from about 0.1 M to about 1.0 M, or from about 0.4 M to about 0.8 M, based on a gel polymer electrolyte-forming composition before adding the first polymerizable monomer, the second polymerizable monomer, and a thermal initiator.

A content (e.g., amount) ratio of the first lithium salt to the second lithium salt may be, for example, from about 1:9 to about 9:1, from about 3:7 to about 7:3, or from about 4:6 to about 6:4. Within the content (e.g., amount) ratio ranges of the first lithium salt to the second lithium salt as described above, the gel polymer electrolyte may provide formation of an SEI layer having both (e.g., simultaneously) excellent or suitable ionic conductivity and structural stability. The content (e.g., amount) ratio of the first lithium salt to the second lithium salt may be, for example, a molar ratio.

In one or more embodiments, the gel polymer electrolyte may include a first organic solvent and a second organic solvent. If the gel polymer electrolyte includes the first organic solvent and the second organic solvent, interfacial resistance between the gel polymer electrolyte and the positive electrode and/or interfacial resistance between the gel polymer electrolyte and a lithium metal layer plated during charging may be reduced more effectively. The first organic solvent and the second organic solvent may each include, for example, a carbonate-based compound. in one or more embodiments, the first organic solvent and the second organic solvent may each be, for example, a carbonate-based organic solvent. If the gel polymer electrolyte includes a carbonate-based first organic solvent and a carbonate-based second organic solvent, the first lithium salt and the second lithium salt may be easily dissolved in the organic solvent, and viscosity of the gel polymer electrolyte-forming composition may be reduced. The first organic solvent may include, for example, a linear carbonate compound. If the first organic solvent is the linear carbonate-based solvent, viscosity of the gel polymer electrolyte-forming composition before crosslinking may be reduced. The gel polymer electrolyte-forming composition may be handled more easily. The second organic solvent may include, for example, a cyclic carbonate compound substituted with a substituent. The substituent of the cyclic carbonate compound may include, for example, a halogen element, a cyano group (CN), a nitro group (NO₂), and/or any combination thereof. If the second organic solvent is a cyclic carbonate-based solvent substituted with a substituent, the first lithium salt and the second lithium salt may be dissolved in the gel polymer electrolyte-forming composition, and the substituent may be involved in formation of an SEI layer to improve structural stability of the SEI layer. In one or more embodiments, the first organic solvent may include, for example, diethylcarbonate (DEC), dimethylcarbonate (DMC), ethylmethylcarbonate (EMC), methylpropylcarbonate, ethylpropylcarbonate, dipropylcarbonate, and/or any combination thereof. The second organic solvent may include, for example, vinylene carbonate substituted with at least one substituent selected from among a halogen element, a cyano group (CN), and a nitro group (NO₂); vinylethylene carbonate substituted with at least one substituent selected from among a halogen element, a cyano group (CN), and a nitro group (NO₂); fluoroethylene carbonate (FEC); fluoroethylene carbonate substituted with at least one substituent selected from among a halogen element, a cyano group (CN), and a nitro group (NO₂); and/or any combination thereof. In one or more embodiments, the first organic solvent may include, for example, diethylcarbonate, and the second organic solvent may include, for example, a fluorine-substituted cyclic carbonate compound. In some embodiments, the second organic solvent may include, for example, fluoroethylene carbonate. The gel polymer electrolyte may not include (e.g., may exclude), for example, a unsubstituted cyclic carbonate-based solvent. In the absence of the unsubstituted cyclic carbonate solvent, the first lithium salt and the second lithium salt may be more easily dissolved in the gel polymer electrolyte-forming composition. A volume ratio of the first organic solvent to the second organic solvent may be, for example, from about 5.5:4.5 to about 9:1, from about 6:4 to about 9:1, from about 6:4 to about 8:2, or from about 6:4 to about 7:3. If the volume ratio of the first organic solvent to the second organic solvent is within the ranges described above, the gel polymer electrolyte-forming composition having excellent or suitable lithium salt solubility and low viscosity may be provided. the gel polymer electrolyte obtained from the gel polymer electrolyte-forming composition having excellent or suitable lithium salt solubility and low viscosity may provide excellent or suitable mechanical properties and improved ionic conductivity.

The gel polymer electrolyte may not include (e.g., may exclude), for example, butanediol, thiourea, and/or any combination thereof. A substantially uniform lithium metal layer may be plated on a negative current collector without utilizing these additives because the gel polymer electrolyte provides substantially uniform mechanical strength to the negative current collector.

The gel polymer electrolyte may be a crosslinked product of the gel polymer electrolyte-forming composition. The gel polymer electrolyte-forming composition may include, for example, the first polymerizable monomer, the second polymerizable monomer, the first lithium salt, the second lithium salt, the first organic solvent, and the second organic solvent. By crosslinking the gel polymer electrolyte-forming composition, the gel polymer electrolyte may be obtained. By crosslinking the first polymerizable monomer and the second polymerizable monomer, a first polymer including repeating units derived from the first polymerizable monomer and the second polymerizable monomer may be obtained. The amounts of the first polymerizable monomer and the second polymerizable monomer may be, for example, from about 0.1 wt% to about 10 wt%, from about 0.2 wt% to about 8 wt%, from about 0.5 wt% to about 6 wt%, about 1 wt% to about 5 wt%, or from about 2 wt% to about 4 wt%, based on a total weight of the gel polymer electrolyte-forming composition. If the amounts of the first polymerizable monomer and the second polymerizable monomer are within the ranges in the gel polymer electrolyte-forming composition, a stable gel polymer electrolyte may be formed. If the amounts of the first polymerizable monomer and the second polymerizable monomer are too low, it may be difficult to form a gel. If the amounts of the first polymerizable monomer and the second polymerizable monomer are too high, the gel polymer electrolyte may be excessively (or substantially) cured causing cracks in the gel polymer electrolyte during a charging and discharging process.

A method of crosslinking the gel polymer electrolyte-forming composition is not limited, for example, the gel polymer electrolyte-forming composition may be crosslinked, for example, by heat, ultraviolet rays, and/or the like. In terms of manufacturing efficiency, thermal crosslinking may be utilized. In one or more embodiments, the gel polymer electrolyte-forming composition may include, for example, a thermal initiator. The thermal initiator may be, for example, t-amyl peroxide or an azobis-based compound, but embodiments of the present disclosure are not limited thereto, and any compounds utilized as a thermal initiator may also be utilized. An amount of the thermal initiator may be 0.1 wt% or less or 0.05 wt% or less based on a total weight of the gel polymer electrolyte-forming composition. The crosslinked product of the gel polymer electrolyte-forming composition may be, for example, a product obtained after heat treatment at about 60°C to about 90 °C for about 1 hour to about 3 hours. Heat treatment conditions may be adjusted according to types (kinds) of the thermal initiator utilized therefor.

The gel polymer electrolyte may be present in a separator and in an interface between the separator and a positive electrode. The gel polymer electrolyte may be partially included in the positive electrode.

In one or more embodiments, the first polymerizable monomer may have a weight average molecular weight of about 500 to about 50,000 or about 1000 to about 45,000. If the weight average molecular weight of the first polymerizable monomer is smaller than the range described above, a crosslink point density is too high in a molecular structure of the polymer after crosslinking, thereby preventing or reducing free migration of the lithium salt. If the weight average molecular weight is greater than the range described above, the crosslink point density is too low in the molecular structure of the polymer after crosslinking, resulting in a decrease in the ability to block or reduce an electrolytic solution.

In one or more embodiments, the second polymerizable monomer may have a weight average molecular weight of about 500 to about 50,000. If the weight average molecular weight of the second polymerizable monomer is within the range described above, a lithium battery having excellent or suitable ionic conductivity and lifespan characteristics may be manufactured.

In one or more embodiments, the gel polymer electrolyte may further include at least one selected from among an ionic liquid and a polymer ionic liquid.

The ionic liquid may include at least one selected from among diethylmethylammonium trifluoromethanesulfonate ([dema][TfO]), dimethylpropylammonium trifluoromethanesulfonate ([dmpa][TfO]), N,N-diethyl-N-methyl-N-(2-methoxyethyl)ammoniumbis(trifluoromethanesulfonyl)imide ([DEMA][TFSI]), N-methyl-N-propylpiperidinium bis(trifluoromethanesulfonyl)imide ([PP13][TFSI]), N-butyl-N-methyl pyrrolidinium bis(trifluoromethanesulfonyl)imide ([Py14][TFSI]), and methylpropylpiperidiniumtrifluoromethanesulfonylimide ([mpp][TFSI]).

The gel polymer electrolyte-forming composition according to one or more embodiments may have a viscosity of about 2 cps to about 20 cps. Therefore, the gel polymer electrolyte-forming composition having a viscosity within the range may be easily impregnated even into a positive electrode having a high loading amount.

According to one or more embodiments, a gel polymer electrolyte-containing separator may be separately prepared in the form of a self-standing film, and a lithium battery may be prepared by disposing the gel polymer electrolyte-containing separator on a negative current collector and a protective layer and disposing a positive electrode thereon. In one or more embodiments, the protective layer may not be provided.

For example, according to one or more embodiments, a lithium battery including a gel polymer electrolyte-containing separator may be manufactured by preparing a battery structure by locating a negative current collector and a protective layer and disposing a separator and a positive electrode thereon, injecting the gel polymer electrolyte-forming composition into the battery assembly, and performing heat treatment.

In one or more embodiments, a lithium battery may include a positive electrode, a negative current collector, and an electrolyte layer arranged between the positive electrode and the negative current collector, wherein the electrolyte layer may include the gel polymer electrolyte.

The gel polymer electrolyte may have an ionic conductivity of about 0.38 mS/cm or more at 25 °C at 1 atm and an ionic conductivity of about 0.47 mS/cm or more at 45 °C at 1 atm. By utilizing the gel polymer electrolyte having the ionic conductivity, a lithium battery having improved cycle characteristics may be provided.

In one or more embodiments, the lithium battery may further include a separator on the negative current collector. The separator may include the gel polymer electrolyte.

In one or more embodiments, the lithium battery may have a structure including a positive electrode; a negative current collector; a separator between the positive electrode and the negative current collector; and a gel-type or kind polymer electrolyte (e.g., the gel polymer electrolyte of the present disclosure) on the separator. The gel-type or kind polymer electrolyte may be arranged between the separator and the positive electrode.

In one or more embodiments, the lithium battery may include a negative active material layer and/or a protective layer between the negative current collector and the separator or may be free from the negative active material layer and/or the protective layer.

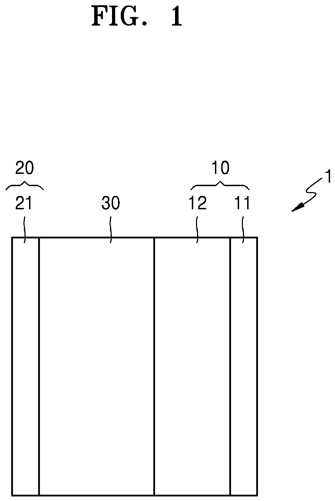

FIG. 1 is a view illustrating a stack structure of a lithium battery 1 according to one or more embodiments of the present disclosure. The lithium battery may be, for example, a lithium metal battery.

The lithium battery 1 may include a negative electrode 20 including a negative current collector 21, and the negative electrode 20 may have a structure including the negative current collector 21 and an electrolyte layer 30 between the negative current collector 21 and a positive electrode 10. The negative electrode 20 is free from a negative active material layer. In one or more embodiments, a protective layer may be formed on the negative current collector 21.

The electrolyte layer 30 may include the gel polymer electrolyte. In one or more embodiments, the electrolyte layer 30 may further include a separator. The separator may include a porous substrate or include the porous substrate and a coating layer formed thereon.

The positive electrode 10 may include a positive active material layer 12 and a positive current collector 11. The separator 30 may include the gel polymer electrolyte.

If the electrolyte layer includes a porous substrate, the gel polymer electrolyte may be arranged between the porous substrate and the positive electrode. The porous substrate may include the gel polymer electrolyte.

In one or more embodiments, the positive electrode 10 may include the gel polymer electrolyte.

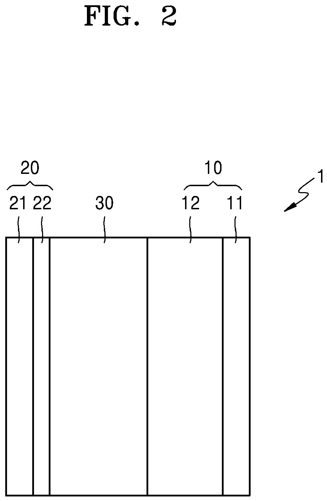

As shown in FIG. 2, a lithium metal layer 22 may further be arranged between the negative current collector 21 and the electrolyte layer 30. The lithium metal layer may correspond to a negative active material layer. The lithium metal layer may include lithium metal or a lithium alloy.

In one or more embodiments, the protective layer may be arranged between the lithium metal layer and the electrolyte layer. The protective layer may be a lithium ion conductive buffer layer (e.g., ionic conductor) and may prevent or reduce the gel polymer electrolyte-containing separator as the electrolyte layer from being in contact with the lithium metal layer. The protective layer may inhibit or reduce formation and growth of lithium dendrite on the negative current collector.

In one or more embodiments, the lithium metal layer may be arranged while a battery is assembled.

A binder of the protective layer may be a vinylidene fluoride-hexafluoropropylene (VDF-HFP) copolymer, polyethylene oxide, polypropylene oxide, polydimethylsiloxane, polyacrylonitrile, polymethyl(meth)acrylate, polyvinylchloride, polyvinylidene fluoride, polyvinylidene fluoride-co-hexafluoro propylene, polyethyleneimine, polyphenylene terephthalate, polymethoxypolyethyleneglycol(meth)acrylate, poly2-methoxy ethylglycidylether, or any combination thereof.

In one or more embodiments, the binder of the protective layer may include a crosslinked product of a first polymer containing hydroxyl groups and a second polymer containing crosslinkable functional groups as a crosslinked polymer of the first polymer and the second polymer.

A weight ratio of the first polymer to the second polymer may be from about 50:50 to about 99:1, and the second polymer may include at least one selected from among a fluorine-containing polyamic acid having a carboxyl group and a fluorine-containing polyimide.

The protective layer may be dense. As density and strength thereof increase, lithium ions freely migrate, and lithium ion transfer is improved, thereby improving lithium plating characteristics. As a result, ionic conductivity may be improved, resulting in improvement in high-rate characteristics of the lithium battery. By disposing the above-described protective layer on the negative active material layer, side reactions between the negative active material layer and the electrolyte may be effectively prevented, inhibited, or reduced.

In one or more embodiments, the protective layer may further include an inorganic material. The inorganic material may include at least one selected from among silica (SiO₂), alumina (Al₂O₃), titanium oxide (TiO₂), lithium titanium oxide (LiTiO₂), barium titanium oxide (BaTiO₂), lithium alumina (LiAlO₂), and zeolite, or any mixture (e.g., combination) thereof.

If the protective layer according to one or more embodiments is present on a surface of the negative active material layer including lithium metal, formation and/or growth of lithium dendrite may be effectively prevented or reduced on the negative current collector. The negative electrode including the above-described protective layer and a lithium battery including the negative electrode may have improved cycle characteristics and stability.

The first polymer containing hydroxyl groups may be carboxymethylcellulose (CMC); polyvinylalcohol (PVA); or a polymerization product of at least one monomer selected from among vinylacetate, butyl (meth)acrylate, 2-hydroxyethyl (meth)acrylate, 2-hydroxypropyl (meth)acrylate, 4-hydroxybutyl (meth)acrylate, 6-hydroxyhexyl (meth) acrylate, 8-hydroxyoctyl (meth)acrylate, 2-hydroxyethyleneglycol (meth)acrylate, 2-hydroxypropyleneglycol (meth)acrylate, acrylic acid, methacrylic acid, 2-(meth)acryloyloxy acetic acid, 3-(meth)acryloyloxy propyl acid, 4-(meth)acryloyloxy butyl acid, itaconic acid, maleic acid, 2-isocyanatoethyl (meth)acrylate, 3-isocyanatopropyl (meth)acrylate, 4-isocyanatobutyl (meth)acrylate, (meth)acrylamide, ethylenedi(meth)acrylate, diethyleneglycol(meth)acrylate, triethyleneglycoldi(meth)acrylate, trimethylenepropanetri(meth)acrylate, trimethylenepropanetriacrylate, 1,3-butandiol(meth)acrylate, 1,6-hexanedioldi(meth)acrylate, allylacrylate, and N-vinyl caprolactam; or a hydrolysate thereof.

In one or more embodiments, the first polymer may be polyvinyl alcohol (PVA). For example, the polyvinylalcohol may be a hydrolysate obtained by alkaline hydrolyzing polyvinyl acetate.

Polyvinylalcohol may have a saponification degree of about 60 % to about 99 %, about 70 % to about 95 %, about 75 % to about 90 %, or about 80 % to about 90 %. For example, in some embodiments, the polyvinylalcohol may have a saponification degree of about 85 % to about 90%. Within the above-described ranges of the saponification degree, the protective layer may have further improved physical properties.

The first polymer may have a weight average molecular weight of about 10,000 Da to about 500,000 Da, about 10,000 Da to about 500,000 Da, about 10,000 Da to about 400,000 Da, about 10,000 Da to about 300,000 Da, about 10,000 Da to about 200,000 Da, about 50,000 Da to about 150,000 Da, about 70,000 Da to about 100,000 Da, or about 80,000 Da to about 100,000 Da. If the first polymer has a weight average molecular weight within the above-described ranges, physical properties of the protective layer may further be improved.

In one or more embodiments, the protective layer may further include a second polymer including a functional group crosslinkable with the first polymer containing hydroxyl groups. In one or more embodiments, the protective layer may further include a crosslinked polymer of the first polymer and the second polymer.

The second polymer may include at least one selected from among a fluorine-containing polyamic acid having a carboxyl group and a fluorine-containing polyimide.

The fluorine-containing polyamic acid may be a polymer represented by Formula 17 or Formula 18, and the fluorine-based polyimide may be a polymer represented by Formula 19 or Formula 20.

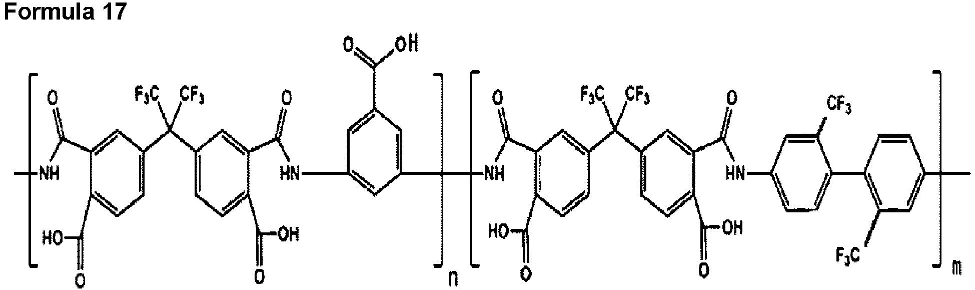

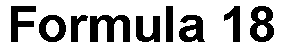

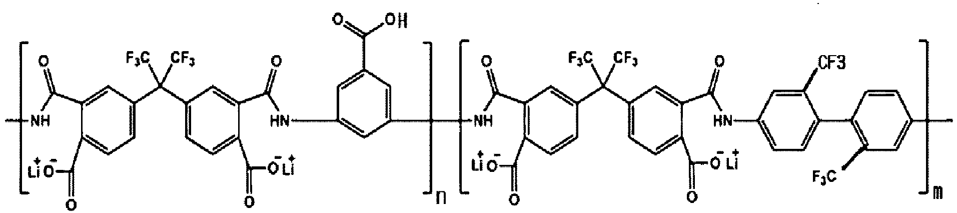

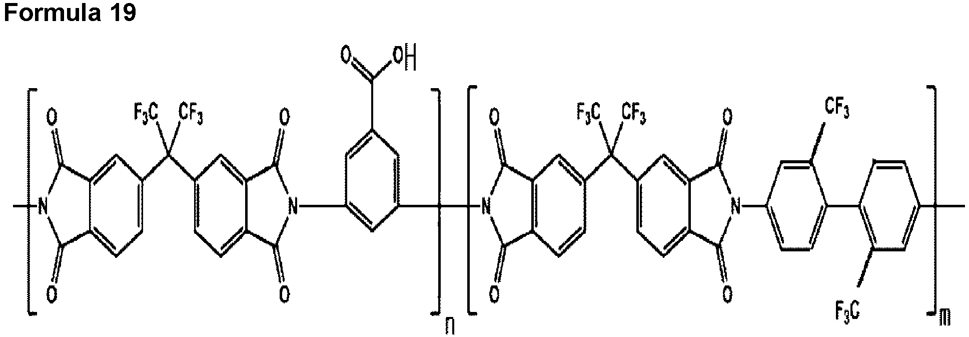

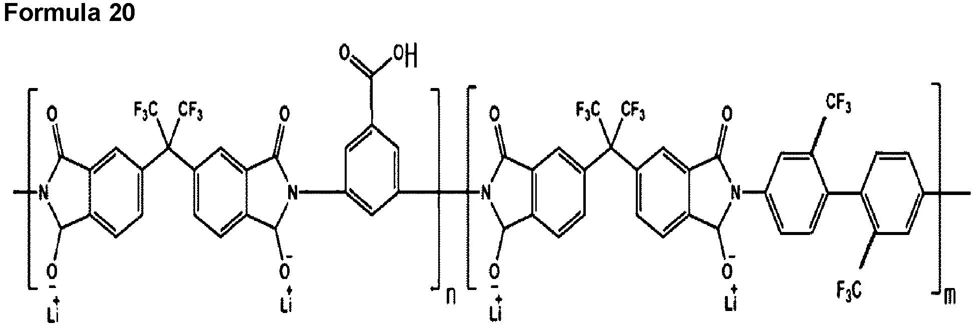

In the formulae above, n and m may each be a mole fraction of respective repeating unit, satisfying 0<n≤1, 0≤m<1, and n+m=1.

For example, in one or more embodiments, in the second polymer, the mole fractions of the crosslinking group-containing repeating unit and the crosslinking group-free repeating unit may satisfy 0<n≤0.5, 0.5≤m<1, respectively, and n+m=1. For example, in one or more embodiments, in the second polymer, the mole fractions of the crosslinking group-containing repeating unit and the crosslinking group-free repeating unit may satisfy 0.1 ≤n≤0.4, 0.6≤m≤0.9, respectively, and n+m=1. For example, in one or more embodiments, in the second polymer, the mole fractions of the crosslinking group-containing repeating unit and the crosslinking group-free repeating unit may satisfy 0.15≤n≤0.35, 0.65≤m≤0.85, respectively, and n+m=1. For example, in one or more embodiments, in the second polymer, the mole fractions of the crosslinking group-containing repeating unit and the crosslinking group-free repeating unit may satisfy 0.2≤n≤0.3, 0.7≤m≤0.8, respectively, and n+m=1. Within the mole fraction ranges, more improved physical properties of the protective layer may be provided.

For example, in some embodiments, the second polymer may be a random copolymer. For example, in some embodiments, the second polymer may be a block copolymer.

In one or more embodiments, the second polymer may have a weight average molecular weight of about 10,000 Da to about 1,200,000 Da, about 10,000 Da to about 1,100,000 Da, about 10,000 Da to about 1,000,000 Da, about 10,000 Da to about 500,000 Da, about 100,000 Da to about 500,000 Da, about 100,000 Da to about 400,000 Da, for example, about 100,000 Da to about 300,000 Da. If the second polymer has a weight average molecular weight within the above-described ranges, physical properties of the protective layer may further be improved. Here, an average molecular weight may be gel permeation chromatography (GPC).

In the protective layer, a weight ratio of the first polymer containing hydroxyl groups to the second polymer may be from about 99:1 to about 50:50, from about 95:5 to about 55:45, from about 95:5 to about 60:40, from about 95:5 to about 65:35, or from about 90:10 to about 70:30. If the weight ratio of the first polymer to the second polymer is within the ranges described above, physical properties by the protective layer may further be improved.

A hydroxyl group of the first polymer may react with a carboxyl group of the second polymer to form an ester bond, thereby forming a third polymer as a crosslinked product of the first polymer and the second polymer. By forming the third polymer, stability of the protective layer may be improved, and interfacial stability may be improved by reducing formation of irreversible lithium-containing materials in the case of a halogen group such as a fluorine functional group.

The protective layer according to one or more embodiments may include a crosslinked polymer of polyvinylalcohol and polyamic acid. The polyamic acid may be, for example, a polymer represented by Formula 17 or 18.

According to one or more embodiments, the crosslinked polymer of the protective layer may be a crosslinked polymer of polyvinylalcohol and fluorinated polyimide (PVA/ PI-f). The fluorinated polyimide may be a polymer represented by Formula 19 or 20 described above.

In one or more embodiments, the protective layer may include a binder including a polar functional group and may be free from a lithium salt.

In one or more embodiments, the protective layer may further include a lithium salt. By including the lithium salt, the protective layer may have excellent or suitable ionic conductivity. The lithium salt may include, for example, at least one selected from among LiSCN, LiN(CN)₂, LiClO₄, LiBF₄, LiAsF₆, LiPF₆, LiCF₃SO₃, LiC(CF₃SO₂)₃, LiC(FSO₂)₃, LiN(SO₂C₂F₅)₂, LiN(SO₂CF₃)₂, LiN(SO₂F)₂, LiSbF₆, LiPF₃(CF₂CF₃)₃, LiPF₃(CF₃)₃, and LiB(C₂O₄)₂.

In the negative electrode according to one or more embodiments, the lithium metal layer may include a lithium metal foil, lithium metal powder, a lithium alloy foil, lithium alloy powder, and/or any combination thereof, and the lithium alloy may include lithium and a first metal.

Lithium metal of the lithium metal foil and lithium metal powder may include, for example, a lithium metal foil, a lithium alloy foil, and/or any combination thereof. The lithium alloy may include lithium and a first metal, and the first metal may be indium (In), silicon (Si), gallium (Ga), tin (Sn), aluminum (Al), zirconium (Zr), niobium (Nb), germanium (Ge), antimony (Sb), bismuth (Bi), gold (Au), platinum (Pt), palladium (Pd), magnesium (Mg), silver (Ag), zinc (Zn), chromium, cesium (Cs), sodium (Na), potassium (K), calcium (Ca), yttrium, tantalum, hafnium, barium, vanadium, strontium, lanthanum, or any combination thereof.

In one or more embodiments, the lithium alloy is an alloy of lithium and a metal alloyable with lithium, for example, a lithium-silver alloy, a lithium-zinc alloy, a lithium-magnesium alloy, or a lithium-tin alloy. In one or more embodiments, the negative active material layer including the lithium metal foil may be, for example, a lithium metal layer. In one or more embodiments, the negative active material layer including the lithium alloy foil may be, for example, a lithium alloy layer. In one or more embodiments, the negative active material layer including lithium metal powder and/or lithium alloy powder may be introduced onto the negative current collector by applying a slurry including lithium powder and a binder thereto. The binder may be a fluorine-based binder, such as polyvinylidene fluoride (PVDF). In one or more embodiments, the negative active material layer may not include (e.g., may exclude) a carbonaceous negative active material. Therefore, the negative active material layer may be formed of a metallic negative active material.

A thickness of the lithium metal layer may be, for example, from about 1 µm to about 50 µm, from about 1 µm to about 30 µm, or from about 10 µm to about 30 µm, or from about 10 µm to about 80 µm. If the lithium metal layer has a thickness within the ranges described above, cycle characteristics and lifespan characteristics of the lithium battery may further be improved.

In one or more embodiments, a thickness of the lithium metal layer 22 may be, for example, smaller than that of the electrolyte layer 30. In some embodiments, the thickness of the lithium metal layer 22 may be, for example, 70 % or less, 60 % or less, 50 % or less, 40 % or less, or 30 % or less of the thickness of the electrolyte layer 30. In some embodiments, the thickness of the lithium metal layer 22 may be, for example, from about 1% to about 70 %, from about 1 % to about 60 %, from about 1 % to about 50 %, from about 1 % to about 40 %, or from about 1 % to about 30 % of the thickness of the electrolyte layer 30. A volume change of the lithium battery 1 may be inhibited or reduced during charging and discharging because the thickness of the lithium metal layer 22 is smaller than that of the electrolyte layer 30. As a result, deterioration caused by a volume change of the lithium battery 1 may be inhibited or reduced.

In one or more embodiments, the thickness of the lithium metal layer 22 may be, for example, smaller than that of the positive active material layer 12. In some embodiments, the thickness of the lithium metal layer 22 may be, for example, 70 % or less, 60 % or less, 50 % or less, 40 % or less, or 30 % or less of the thickness of the positive active material layer 12. In some embodiments, the thickness of the lithium metal layer 22 may be, for example, from about 1% to about 70 %, from about 1 % to about 60 %, from about 1 % to about 50 %, from about 1 % to about 40 %, or from about 1 % to about 30 % of the thickness of the positive active material layer 12. A volume change of the lithium battery 1 may be inhibited or reduced during charging and discharging because the thickness of the lithium metal layer 22 is smaller than that of the positive active material layer 12. As a result, deterioration caused by a volume change of the lithium battery 1 may be inhibited or reduced.

In one or more embodiments, in an X-ray photoelectron spectroscopy (XPS) analysis of the surface of the lithium metal layer 22, for example, a peak intensity derived from fluorine (F) may be greater than a peak intensity derived from oxygen (O). In some embodiments, in the XPS analysis of the surface of the lithium metal layer 22, for example, the peak intensity derived from fluorine (F) may be more than 100 %, 105 % or more, 110 % or more, or 120 % or more of the peak intensity derived from oxygen (O). In some embodiments, in the XPS analysis of the surface of the lithium metal layer 22, for example, the peak intensity derived from fluorine (F) may be more than 100 % but not more than 200 %, from about 105 % to about 200 %, from about 110 % to about 200 %, or from about 120 % to about 200 % of the peak intensity derived from oxygen (O). Structural stability of the SEI layer may be improved because the SEI layer formed on the lithium metal layer 22 mainly includes an inorganic compound containing fluorine (F). As a result, cycle characteristics of the lithium battery 1 may be improved. In one or more comparative embodiments, if the SEI layer formed on the surface of the lithium metal layer 22 mainly includes an organic compound containing oxygen (O), structural stability of the SEI layer may deteriorate. The peak derived from fluorine (F) may be, for example, a peak derived from 1s orbital of fluorine (F). The peak intensity derived from oxygen (O) may be, for example, a peak derived from 1s orbital of oxygen (O).

In one or more embodiments, the lithium metal layer 22 may be plated by charging after assembling the lithium battery 1, and the lithium metal layer 22 may not be included while the lithium battery 1 is assembled, and thus energy density of the lithium battery 1 may increase. In addition, if the lithium metal layer 22 is additionally provided by charging after assembling the lithium battery 1, a region between the negative electrode 20, i.e., the negative current collector 21, and the electrolyte layer 30, may be a Li-free region not including lithium (Li) in the early stage of charging or after completely discharging the lithium battery 1.

In one or more embodiments, a particle diameter of lithium powder may be, for example, from about 0.1 µm to about 3 µm, from about 0.1 µm to about 2 µm, from about 0.1 µm to about 2 µm. If the lithium powder has a particle diameter within the ranges described above, lifespan characteristics of the lithium battery may further be improved.

In one or more embodiments, the negative electrode may further include a negative active material layer.

The negative active material layer may include: a carbonaceous material; a mixture of a carbonaceous material and at least one of a first metal; a composite of a carbonaceous material and at least one of the first metal; or any combination thereof, wherein the carbonaceous material includes amorphous carbon having an average particle diameter of about 10 nm to about 100 nm. The carbonaceous material may include carbon black, carbon nanotube, carbon nanofiber, fullerene, activated carbon, carbon fiber, and/or any combination thereof.

The first metal may be indium (In), silicon (Si), gallium (Ga), tin (Sn), aluminum (Al), zirconium (Zr), niobium (Nb), germanium (Ge), antimony (Sb), bismuth (Bi), gold (Au), platinum (Pt), palladium (Pd), magnesium (Mg), silver (Ag), zinc (Zn), chromium, cesium, sodium, potassium, calcium, yttrium, tantalum, hafnium, barium, vanadium, strontium, lanthanum, or any combination thereof.

In one or more embodiments, the lithium metal layer may further be arranged between the negative current collector and one side of the protective layer. In some embodiments, the lithium metal layer may further be arranged on the other side of the protective layer opposite to the one side.

The protective layer may have a thickness of about 1 µm to about 10 µm, about 2 µm to about 8 µm, or about 3 µm to about 5 µm.

If the thickness of the protective layer is within the ranges described above, internal resistance may increase and energy density, high-rate characteristics, and lifespan characteristics may be improved without a decrease in energy density of the lithium battery.

In the lithium battery according to one or more embodiments, the electrolyte layer may further include an electrolyte. The electrolyte may be a liquid electrolyte, a solid electrolyte, a gel electrolyte, or any combination thereof.

The solid electrolyte may include an oxide-based solid electrolyte, a sulfide-based solid electrolyte, a polymer solid electrolyte, and/or any combination thereof. The gel electrolyte may have a gel state without including a polymer.

In one or more embodiments, the gel electrolyte may include a polymer gel electrolyte. In one or more embodiments, the positive electrode may include a positive current collector and a positive active material layer, and at least one of the positive current collector and the negative current collector may include a base film and a metal layer arranged on one side or both (e.g., simultaneously) sides (e.g., opposite sides) of the base film. The base film may include a polymer, and the polymer may include polyethyleneterephthalate (PET), polyethylene (PE), polypropylene (PP), polybutyleneterephthalate (PBT), polyimide (PI), and/or any combination thereof.

The metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

A thickness of the negative active material layer may be, for example, from about 0.1 µm to about 500 µm, from about 1 µm to about 500 µm, or from about 10 µm to about 500 µm, but embodiments of the present disclosure are not limited thereto, and may be adjusted according to desired or required shape, capacity, and/or the like of the lithium battery. If the thickness of the negative active material layer is within the ranges described above, cycle characteristics of the lithium battery may be improved without a decrease in energy density.

The lithium battery according to one or more embodiments may not include (e.g., may exclude) a negative active material layer between the negative current collector 21 and the protective layer. In the negative electrode in which the negative active material layer is not provided, lithium metal may be plated between the negative current collector 21 and the protective layer by charging after the positive electrode and the electrolyte are introduced into the lithium battery. As a result, the negative electrode 20 may include the negative active material layer. The negative active material layer may be a plated lithium layer.

In one or more embodiments, the lithium battery may further include a separator.

In one or more embodiment, the separator may have a pore diameter of about 0.01 µm to about 10 µm and a thickness of about 5 µm to about 20 µm. As the separator, for example, an olefin-based polymer such as polypropylene; or a sheet or non-woven fabric formed of glass or polyethylene may be utilized. If a solid polymer electrolyte is utilized as the electrolyte, the solid polymer electrolyte may also serve as the separator.

Non-limiting examples of the olefin-based polymer among the separators may include polyethylene, polypropylene, or a multilayered film having two or more layers thereof. In some embodiments, a mixed multilayered film such as a polyethylene/polypropylene double-layered separator, a polyethylene/polypropylene/polyethylene triple-layered separator, a polypropylene/polyethylene/polypropylene triple-layered separator may also be utilized.

In the lithium battery according to one or more embodiments, the liquid electrolyte may include a lithium salt and an organic solvent.

The organic solvent may be, for example, an aprotic organic solvent such as N-methyl-2-pyrrolidone, propylene carbonate, ethylene carbonate, butylene carbonate, dimethyl carbonate, diethyl carbonate, gamma-butyrolactone, 1,2-dimethoxy ethane, tetrahydroxyfranc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, ethyl propionate, or any combination thereof. Among them, in one or more embodiments, a carbonate-based solvent such as propylene carbonate, ethylene carbonate, butylene carbonate, dimethyl carbonate, and diethyl carbonate may be utilized.

The lithium salt may be any lithium salts utilized in lithium secondary batteries, and as a substance easily dissolved in the non-aqueous organic solvent, for example, at least one selected from among LiSCN, LiN(CN)₂, LiClO₄, LiBF₄, LiAsF₆, LiPF₆, LiCF₃SO₃, LiC(CF₃SO₂)₃, LiC(FSO₂)₃, LiN(SO₂C₂F₅)₂, LiN(SO₂CF₃)₂, LiN(SO₂F)₂, LiSbF₆, LiPF₃(CF₂CF₃)₃, LiPF₃(CF₃)₃, and LiB(C₂O₄)₂, may be utilized.

The lithium salt may have a concentration of, for example, about 1 M to about 5 M, for example, about 1 M to about 2.5 M, in the liquid electrolyte. Within the above-described concentration ranges, lithium ions may be generated in an amount sufficient for charging and discharging of the lithium battery.

If the gel-type or kind polymer electrolyte is present in pores of the porous substrate of the separator, interfacial resistance among the positive electrode, the negative electrode, and the separator may be minimized or reduced, thereby facilitating migration of lithium.

According to one or more embodiments, the negative active material layer may be located while the lithium battery is assembled. According to one or more embodiments, lithium metal may be plated after charging, and thus the negative active material layer may be included therein. The negative active material layer may be a plated lithium layer.

The negative active material layer may include lithium metal or a lithium alloy.

If the negative active material layer is located while the battery is assembled, the negative active material may include a carbonaceous material along or at least one selected from among a carbonaceous material, a metal, and a metalloid.

The carbonaceous material may include amorphous carbon having an average particle diameter of about 10 nm to about 100 nm. The carbonaceous material may include carbon black (CB), acetylene black (AB), furnace black (FB), Ketjen black (KB), graphene, and/or any combination thereof.

In one or more embodiments, the negative active material layer may be a lithium metal foil, lithium metal powder, a lithium alloy foil, lithium alloy powder, or any combination thereof, and the lithium alloy may include lithium and a first metal.

The first metal may be indium (In), silicon (Si), gallium (Ga), tin (Sn), aluminum (Al), zirconium (Zr), niobium (Nb), germanium (Ge), antimony (Sb), bismuth (Bi), gold (Au), platinum (Pt), palladium (Pd), magnesium (Mg), silver (Ag), zinc (Zn), chromium, cesium, sodium, potassium, calcium, yttrium, tantalum, hafnium, barium, vanadium, strontium, lanthanum, or any combination thereof.

In one or more embodiments, the negative active material layer 22 may include, for example, a lithium foil, lithium powder, and/or any combination thereof. The lithium foil may include, for example, a lithium metal foil, a lithium alloy foil, and/or any combination thereof. The lithium powder may include lithium metal powder, lithium alloy powder, and/or any combination thereof. The lithium alloy is an alloy of lithium and a metal alloyable with lithium, for example, a lithium-silver alloy, a lithium-zinc alloy, a lithium-magnesium alloy, or a lithium-tin alloy. In one or more embodiments, the negative active material layer including the lithium metal foil may be, for example, a lithium metal layer. In one or more embodiments, the negative active material layer including the lithium alloy foil may be, for example, a lithium alloy layer. In one or more embodiments, the negative active material layer including lithium metal powder and/or lithium alloy powder may be introduced onto the negative current collector by applying a slurry including lithium powder and a binder thereto. The binder may be a fluorine-based binder, such as polyvinylidene fluoride (PVDF). In one or more embodiments, the negative active material layer may not include (e.g., may exclude) a carbonaceous negative active material. Therefore, the negative active material layer may be formed of a metallic negative active material.

The negative current collector may be formed of, for example, a material that does not react with lithium, i.e., a material that does not form an alloy and a compound with lithium. The material constituting the negative current collector may be, for example, copper (Cu), stainless steel, titanium (Ti), iron (Fe), cobalt (Co), and nickel (Ni), but embodiments of the present disclosure are not limited thereto, and any materials available in the art as electrode current collectors may also be utilized. The negative current collector may be formed of one metal selected from among those described above or an alloy or coating material of two or more metals selected therefrom. The negative current collector may be, for example, in the form of a plate or a foil.

In one or more embodiments of the present disclosure, the positive current collector may be, for example, in the form of a plate or a foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive current collector may have a thickness of, for example, about 1 µm to about 100 µm, about 1 µm to about 50 µm, about 5 µm to about 25 µm, or about 10 µm to about 20 µm.

The negative active material layer may include a negative active material and a binder.

The negative active material may be, for example, in the form of particles. The negative active material in the form of particles may have an average particle diameter of, for example, about 10 nm to about 4 µm, about 10 nm to about 1 µm, about 10 nm to about 500 nm, about 10 nm to about 100 nm, or about 20 nm to about 80 nm. If the average particle diameter of the negative active material is within the ranges described above, reversible plating and/or dissolution of lithium may occur more easily during a charge/discharge process. The average particle diameter of the negative active material may be, for example, a median diameter D50 measured utilizing a laser particle size analyzer.

In one or more embodiments, the negative active material may include, for example, at least one of a carbonaceous negative active material and/or a metal or metalloid negative active material. The carbonaceous negative active material may be, for example, amorphous carbon. The carbonaceous negative active material may be, for example, carbon black (CB), acetylene black (AB), furnace black (FB), Ketjen black (KB), and graphene, but embodiments of the present disclosure are not limited thereto, and any carbonaceous materials classified as amorphous carbon may also be utilized. Amorphous carbon may be carbon that does not have crystallinity or has very low crystallinity and may be distinguished from crystalline carbon or graphite-based carbon. The metal or metalloid negative active material may include at least one selected from among gold (Au), platinum (Pt), palladium (Pd), silicon (Si), silver (Ag), aluminum (Al), bismuth (Bi), tin (Sn), and zinc (Zn), but embodiments of the present disclosure are not limited thereto, and any suitable metal or metalloid negative active materials that form an alloy or compound with lithium may also be utilized. For example, nickel (Ni) does not form an alloy with lithium, and thus Ni is not a metal negative active material. The negative active material layer may include one of these negative active materials and/or any mixture of a plurality of different negative active materials. In one or more embodiments, the negative active material layer may include, for example, a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of the mixture (e.g., the amorphous carbon to the at least one metal) may be, for example, from 10:1 to 1:2, from 10:1 to 1:1, from 7:1 to 1:1, from 5:1 to 1:1, or from 4:1 to 2:1. For example, in one or more embodiments, the negative active material included in the negative active material layer may include a mixture of first particles formed of amorphous carbon and second particles formed of a metal or metalloid. The metal may include, for example, gold (Au), platinum (Pt), palladium (Pd), silicon (Si), silver (Ag), aluminum (Al), bismuth (Bi), tin (Sn), and zinc (Zn). An amount of the second particles may be from about 8 wt% to about 60 wt%, from about 10 wt% to about 50 wt%, from about 15 wt% to about 40 wt%, or from about 20 wt% to about 30 wt% based on a total weight of the mixture. If the amount of the second particles is within the ranges described above, cycle characteristics of the lithium battery may further be improved.

The binder included in the negative active material layer may be, for example, styrene butadiene rubber (SBR), polytetrafluoroethylene, polyvinylidene fluoride, polyethylene, a vinylidene fluoride/hexafluoropropylene copolymer, polyacrylonitrile, or polymethylmethacrylate, but embodiments of the present disclosure are not limited thereto, and any binders available in the art may also be utilized. The binder may be utilized alone or in a combination of a plurality of different binders. If the negative active material layer does not include a binder, the negative active material layer may be easily separated from a ceramic coating layer of the negative electrode or from the negative current collector 21. An amount of the binder included in the negative active material layer may be, for example, from about 1 wt% to about 20 wt% based on a total weight of the negative active material layer.

In one or more embodiments, a thickness of the negative active material layer may be, for example, from about 0.1 µm to about 500 µm, or from about 100 µm to about 500 µm. In one or more embodiments, the thickness of the negative active material layer may be, for example, from about 1 % to about 50 %, from about 1 % to about 30 %, from about 1 % to about 10 %, or from about 1 % to about 5 % based on a thickness of the positive active material layer. If the negative active material layer is too thin, lithium dendrite formed between the negative active material layer and the negative current collector may disintegrate the negative active material layer, making it difficult to improve cycle characteristics of the lithium battery. If the negative active material layer is too thick, energy density of the lithium battery including the negative electrode 20 may decrease, making it difficult to improve cycle characteristics of thereof.

As the thickness of the negative active material layer decreases, for example, a charging capacity of the negative active material layer may also decrease. In one or more embodiments, the charging capacity of the negative active material layer may be, for example, from about 0.1 % to about 50 %, from about 1 % to about 30 %, from about 1 % to about 10 %, from about 1 % to about 5 %, or from about 1 % to about 2 % based on a total charging capacity of the positive active material layer. If the charging capacity of the negative active material layer is too low, lithium dendrite formed between the negative active material layer and the negative current collector may disintegrate the negative active material layer, making it difficult to improve cycle characteristics of the lithium battery. If the charging capacity of the negative active material layer is too high, energy density of the lithium battery including the negative electrode 20 may decrease, making it difficult to improve cycle characteristics. The charging capacity of the positive active material layer may be obtained by multiplying a charging capacity density (mAh/g) of the positive active material by a mass of the positive active material of the positive active material layer. If one or more suitable types (kinds) of positive active materials are utilized, charging capacity density×mass values for each of all of the positive active materials may be calculated separately, and a sum of the values is regarded as the charging capacity of the positive active material layer. The charging capacity of the negative active material layer may be calculated in substantially the same manner. The charging capacity of the negative active material layer may be obtained by multiplying a charging capacity density (mAh/g) of the negative active material by a mass of the negative active material of the negative active material layer. If one or more suitable types (kinds) of negative active materials are utilized, charging capacity density×mass values for each of all of the negative active materials may respectively be calculated, and a sum of the values may be regarded as the charging capacity of the negative active material layer. For example, the charging capacity densities of the positive active material and the negative active material may each be a capacity estimated utilizing all-solid half-cells to which lithium metal is applied as a counter electrode. The charging capacities of the positive active material layer and the negative active material layer may each directly be measured utilizing the all-solid half-cells. The charging capacity density may be calculated by dividing the measured charging capacity by the mass of each active material. In one or more embodiments, a charging capacity of the positive active material layer and the negative active material layer may be initial charging capacity measured during charging of a first cycle.

### Lithium Battery

The lithium battery according to one or more embodiments may include: a positive electrode; a negative current collector; and an electrolyte layer between the positive electrode and the negative current collector. In one or more embodiments, the lithium battery may further include a separator. In one or more embodiments, the lithium battery may further include a lithium metal layer between the negative current collector and the electrolyte layer. In one or more embodiments, the lithium battery may further include a negative active material layer between the negative current collector and the electrolyte layer. The lithium battery may also provide excellent or suitable lifespan characteristics. The lithium battery may be, for example, a lithium primary battery, a lithium secondary battery, a lithium-sulfur battery, or a lithium-air battery, but embodiments of the present disclosure are not limited thereto, and any lithium batteries available in the art may also be utilized.

Although the lithium battery is prepared, for example, by the following method, the method is not limited thereto and may be adjusted according to desired or required conditions.

### Positive Electrode

First, a positive active material composition is prepared by mixing a positive active material, a conductive material (e.g., an electron conductor), a binder, and a solvent. The prepared positive active material composition may directly be applied onto an aluminum current collector and dried to prepare a positive plate on which a positive active material layer is formed. In one or more embodiments, a positive electrode plate on which a positive active material layer is formed may be prepared by casting the positive active material composition on a separate support and laminating a film separated from the support on an aluminum current collector.

As the positive active material, a compound allowing reversible intercalation and deintercalation of lithium (lithiated intercalation compound) may be utilized. For example, one or more types (kinds) of composite oxides of lithium and a metal selected from among cobalt, manganese, nickel, and any combination thereof may be utilized.

The composite oxide may be a lithium transition metal composite oxide, and non-limiting examples thereof may be a lithium nickel oxide, a lithium cobalt oxide, a lithium manganese oxide, a lithium iron phosphate compound, a cobalt-free nickel-manganese oxide, and/or any combination thereof.

Non-limiting examples of the composite oxides may include one of compounds represented by the following formulae: LiₐA_{1-b}X_{b}O_{2-c}D_{c} (wherein 0.90≤a≤1.8, 0≤b≤0.5, and 0≤c≤0.05); LiₐMn_{2-b}X_{b}O_{4-c}D_{c} (wherein 0.90≤a≤1.8, 0≤b≤0.5, and 0≤c≤0.05); LiₐNi_{1-b-c}Co_{b}X_{c}O_{2-α}D_{α} (wherein 0.90≤a≤1.8, 0≤b≤0.5, 0≤c≤0.5, and 0<α<2); LiₐNi_{1-b-c}Mn_{b}X_{c}O_{2-α}D_{α} (wherein 0.90≤a≤1.8, 0≤b≤0.5, 0≤c≤0.5, and 0<α<2); LiₐNi_{b}Co_{c}L¹_{d}GₑO₂ (wherein 0.90≤a≤1.8, 0≤b≤0.9, 0≤c≤0.5, 0≤d≤0.5, and 0≤e≤0.1); LiₐNiG_{b}O₂ (wherein 0.90≤a≤1.8 and 0.001≤b≤0.1); LiₐCoG_{b}O₂ (wherein 0.90≤a≤1.8 and 0.001≤b≤0.1); LiₐMn_{1-b}G_{b}O₂ (wherein 0.90≤a≤1.8 and 0.001≤b≤0.1); LiₐMn₂G_{b}O₄ (wherein 0.90≤a≤1.8 and 0.001≤b≤0.1); LiₐMn_{1-g}G_{g}PO₄ (wherein 0.90≤a≤1.8 and 0≤g≤0.5); Li_{(3-f)}Fe₂(PO₄)₃ (wherein 0≤f≤2); and LiₐFePO₄ (wherein 0.90≤a≤1.8).

In the formulae, A may be nickel (Ni), cobalt (Co), manganese (Mn), or any combination thereof; X may be aluminum (Al), Ni, Co, Mn, chromium (Cr), iron (Fe), magnesium (Mg), strontium (Sr), vanadium (V), a rear earth element, or any combination thereof; D may be oxygen (O), fluorine (F), sulfur (S), phosphorous (P), or any combination thereof; G may be Al, Cr, Mn, Fe, Mg, lanthanum (La), cerium (Ce), Sr, V, or any combination thereof; and L¹ may be Mn, Al, or any combination thereof.

For example, in one or more embodiments, the positive active material may be a high nickel-based positive active material having a nickel content (e.g., amount) of 80 mol% or more, 85 mol% or more, 90 mol% or more, 91 mol% or more, or 94 mol% or more but not more than 99 mol% based on 100 mol% of all metals other than lithium in the lithium transition metal composite oxide. The high nickel-based positive active material capable of realizing high capacity may be applied to high-capacity, high-density lithium secondary batteries.

In one or more embodiments, the positive active material may be, for example, LiₐNiₓCo_{y}M_{z}O_{2-b}A_{b} (wherein 1.0≤a≤1.2, 0≤b≤0.2, 0.8≤x<1, 0<y≤0.3, 0<z≤0.3, x+y+z=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A may be F, S, Cl, Br, or any combination thereof), LiNiₓCo_{y}Mn_{z}O₂ (wherein 0.8≤x≤0.95, 0≤y≤0.2, 0<z≤0.2 and x+y+z=1), LiNiₓCo_{y}Al₂O₂ (wherein 0.8≤x≤0.95, 0≤y≤0.2, 0<z≤0.2, and x+y+z=1), LiNiₓCo_{y}Mn_{z}Al_{w}O₂ (wherein 0.8≤x≤0.95, 0≤y≤0.2, 0<z≤0.2, 0<w≤0.2, and x+y+z+w=1), LiₐCoₓM_{y}O_{2-b}A_{b} (wherein 1.0≤a≤1.2, 0≤b≤0.2, 0.9≤x≤1, 0≤y≤0.1, x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A may be F, S, Cl, Br, or any combination thereof), LiₐNiₓMn_{y}M'_{z}O_{2-b}A_{b} (wherein 1.0≤a≤1.2, 0≤b≤0.2, 0<x≤0.3, 0.5≤y<1, 0<z≤0.3, x+y+z=1, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A may be F, S, Cl, Br, or any combination thereof), LiₐM1ₓM2_{y}PO_{4-b}X_{b} (wherein 0.90≤a≤1.1, 0≤x≤0.9, 0≤y≤0.5, 0.9<x+y<1.1, 0≤b≤2, M1 may be chromium (Cr), manganese (Mn), iron (Fe), cobalt (Co), nickel (Ni), copper (Cu), zirconium (Zr), or any combination thereof, M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or any combination thereof, and X may be O, F, S, P, or any combination thereof), or LiₐM3_{z}PO₄ (wherein 0.90≤a≤1.1, 0.9≤z≤1.1, and M3 is chromium (Cr), manganese (Mn), iron (Fe), cobalt (Co), nickel (Ni), copper (Cu), zirconium (Zr), or any combination thereof).

The conductive material may be carbon black, graphite particulates, natural graphite, artificial graphite, acetylene black, Ketjen black, or carbon fiber; carbon nanotubes; metal such as copper, nickel, aluminum, and/or silver each of which is utilized in powder, fiber, or tube form; or conductive polymers such as polyphenylene derivatives, but embodiments of the present disclosure are not limited thereto, and any material utilized in the art as conductive materials may also be utilized. In one or more embodiments, the positive electrode may not include (e.g., may exclude) a separate conductive material.

The binder may be a vinylidene fluoride/hexafluoropropylene copolymer, polyvinylidene fluoride, polyacrylonitrile, polymethylmethacrylate, polytetrafluoroethylene (PTFE), a mixture thereof, or a styrene butadiene rubber polymer. The solvent may be N-methylpyrrolidone (NMP), acetone, and/or water, but embodiments of the present disclosure are not limited thereto, and any solvent utilized in the art may also be utilized.

In one or more embodiments, the positive electrode for a lithium secondary battery may include a positive current collector and a positive active material layer formed on the positive current collector. The positive active material layer may include a positive active material (e.g., in a form of particles) and may further include a binder and/or a conductive material.

For example, in some embodiments, the positive electrode may further include an additive capable of serving as a sacrificial positive electrode.

An amount of the positive active material may be from about 90 wt% to about 99.5 wt% based on 100 wt% of a total weight of the positive active material layer, and amounts of the binder and the conductive material may each independently be from about 0.5 wt% to about 5 wt% based on 100 wt% of the total weight of the positive active material layer.

The binder may hold the positive active material particles together and bind the positive active material to the positive current collector. Examples of the binder may include polyvinyl alcohol, carboxymethyl cellulose, hydroxypropyl cellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, a polypropylene, styrene-butadiene rubber, a (meth)acrylate styrene-butadiene rubber, an epoxy resin, a (meth)acrylic resin, a polyester resin, and nylon, but embodiments of the present disclosure are not limited thereto.

The conductive material may be utilized to provide conductivity to the electrode and may be any conductive material that does not cause any chemical change in a battery and has conductivity (e.g., is an electron conductor). Non-limiting examples of the conductive material may include: a carbonaceous material such as natural graphite, artificial graphite, carbon black, acetylene black, Ketjen black, carbon fiber, carbon nanofiber, and carbon nanotube; a metallic material such as copper, nickel, aluminum, and silver, each of which may be utilized in powder or fiber form; a conductive polymer such as a polyphenylene derivative; and/or a (e.g., e.g., any suitable) mixture thereof.

The positive current collector may be, for example, in the form of a plate or a foil, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive current collector may have a thickness of, for example, about 1 µm to about 100 µm, about 1 µm to about 50 µm, about 5 µm to about 25 µm, or about 10 µm to about 20 µm.

In one or more embodiments, the positive current collector may include, for example, a base film and a metal layer on one side or both (e.g., simultaneously) sides (e.g., opposite sides) of the base film. The base film may include, for example, a polymer. In some embodiments, the polymer may be, for example, a thermoplastic polymer. The polymer may include, for example, polyethyleneterephthalate (PET), polyethylene (PE), polypropylene (PP), polybutyleneterephthalate (PBT), polyimide (PI), and/or any combination thereof. In one or more embodiments, the base film may be, for example, an insulator. If the base film includes an insulating thermoplastic polymer, the base film may soften or liquefy in the event of a short circuit to stop the operation of a battery, thereby inhibiting a rapid increase in currents. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may act as an electrochemical fuse to be cut if an overcurrent occurs, thereby preventing or reducing a short circuit. By controlling a thickness of the metal layer, a limiting current and a maximum current may be adjusted. The metal layer may be plated or deposited on the base film. As the thickness of the metal layer decreases, the limiting current and/or the maximum current of the positive current collector may decrease, so that stability of the lithium battery may be improved in the event of occurrence of a short circuit. In one or more embodiments, a lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. In one or more embodiments, a metal chip may further be added between the metal layer and the lead tab for stronger welding between the metal layer and the lead tab. The metal chip may be a chip of the same material as the metal of the metal layer. The metal chip may be, for example, a metal foil or a metal mesh. In one or more embodiments, the metal chip may be, for example, an Al foil, a copper foil, or an SUS foil. By disposing the metal chip on the metal layer and performing welding, the lead tab may be welded to a metal chip/metal layer stack structure or a metal chip/metal layer/base film stack structure. While the base film, the metal layer, and/or the metal chip melt during welding, the metal layer or the metal layer/metal chip stack structure may be electrically connected to the lead tab. In one or more embodiments, a metal chip and/or a lead tab may further be added to a portion of the metal layer. The base film may have a thickness of, for example, about 1 µm to about 50 µm, about 1.5 µm to about 50 µm, about 1.5 µm to about 40 µm, or about 1 µm to about 30 µm. If the thickness of the base film is within the above-described ranges, the weight of the electrode assembly may be reduced more effectively. In one or more embodiments, a melting point of the base film may be, for example, from about 100 °C to about 300 °C, from about 100 °C to about 250 °C, or from about 100 °C to about 200 °C. If the base film has a melting point within the above-described ranges, the base film may melt during a process of welding the lead tab to be easily bound to the lead tab. In some embodiments, to improve adhesion between the base film and the metal layer, surface treatment such as corona treatment may be performed on the base film. In one or more embodiments, a thickness of the metal layer may be, for example, from about 0.01 µm to about 3 µm, from about 0.1 µm to about 3 µm, from about 0.1 µm to about 2 µm, or from about 0.1 µm to about 1 µm. If the thickness of the metal layer is within the above-described ranges, stability of the electrode assembly may be obtained while maintaining conductivity thereof. In one or more embodiments, a thickness of the metal chip may be, for example, from about 2 µm to about 10 µm, from about 2 µm to about 7 µm, or from about 4 µm to about 6 µm. If the thickness of the metal chip is within the above-described ranges, the metal layer may be connected to the lead tab more easily. If the positive current collector has the above-described structure, the weight of the positive electrode may be reduced, so that energy density of the positive electrode and the lithium battery may be increased.

### Electrolyte Layer

Subsequently, an electrolyte layer may be prepared. The electrolyte layer may include the gel polymer electrolyte according to one or more embodiments.

The electrolyte of the electrolyte layer may include, for example, a liquid electrolyte, a solid electrolyte, a gel electrolyte, and/or any combination thereof. The liquid electrolyte is as described above in the liquid electrolyte of the gel polymer electrolyte.

The solid electrolyte may be, for example, an oxide-based solid electrolyte, a sulfide-based solid electrolyte, a polymer solid electrolyte, or any combination thereof.

### Negative Electrode

The negative electrode may include a negative current collector.

In one or more embodiments, the negative current collector 21 may include, for example, a base film and a metal layer on one side or both sides (e.g., opposite sides) of the base film. In one or more embodiments, the base film may include, for example, a polymer. In some embodiments, the polymer may be, for example, a thermoplastic polymer. The polymer may include, for example, polyethyleneterephthalate (PET), polyethylene (PE), polypropylene (PP), polybutyleneterephthalate (PBT), polyimide (PI), and/or any combination thereof. In one or more embodiments, the polymer may be an insulating polymer. If the base film includes an insulating thermoplastic polymer, the base film may soften or liquefy in the event of a short circuit to stop the operation of a battery, thereby inhibiting a rapid increase in currents. In one or more embodiments, the metal layer may include, for example, copper (Cu), stainless steel, titanium (Ti), iron (Fe), cobalt (Co), nickel (Ni), or an alloy thereof. In one or more embodiments, the metal layer may correspond to, for example, a first metal substrate. The metal layer may further include a coating layer including a second metal. In one or more embodiments, the negative current collector 21 may further include a metal chip and/or a lead tab. For detailed descriptions of the base film, the metal layer, the metal chip, and the lead tab of the negative current collector 21, refer to the above-described positive current collector. If the negative current collector 21 has the above-described structure, the weight of the negative electrode may be reduced, so that energy density of the negative electrode and the lithium battery may be increased.

The negative current collector may include, for example, copper (Cu), nickel (Ni), Ni-coated Cu, stainless steel (SUS), iron (Fe), cobalt (Co), or an alloy thereof.

In one or more embodiments, a negative active material layer may be arranged on the negative current collector. In some embodiments, the negative active material layer may be formed as a plated lithium layer after charging. In some embodiments, the negative active material layer may also be formed by utilizing a negative active material while assembling the battery.

A method of forming the negative active material layer by utilizing the negative active material may be the same as the method of forming the positive active material layer, except that the negative active material is utilized instead of the positive active material.

In one or more embodiments, the lithium battery may further include, for example, a thin film including elements capable of forming an alloy with lithium on the negative current collector. The thin film may be arranged between the negative current collector and the negative active material layer. The thin film may include, for example, an element capable of forming an alloy with lithium. Examples of the element capable of forming an alloy with lithium may include gold, silver, zinc, tin, indium, silicon, aluminum, and bismuth, but embodiments of the present disclosure are not limited thereto, and any elements capable of forming an alloy with lithium well suitable in the art may also be utilized. The thin film may be formed of any one of the metals or an alloy of one or more suitable types (kinds) of metals. By disposing the thin film on a surface of the negative current collector, a first negative active material layer plated between the thin film and the negative active material layer may become flatter, thereby further improving cycle characteristics of the lithium battery.

### Electrolyte Layer

The electrolyte layer may include the gel polymer electrolyte and further include a separator.

Any separators utilized in the art for lithium batteries may be utilized.

As the separator, polyethylene, polypropylene, polyvinylidene fluoride, or a multilayered film having two or more layers thereof may be utilized. A mixed multilayered film such as a polyethylene/polypropylene double-layered separator, a polyethylene/polypropylene/polyethylene triple-layered separator, a polypropylene/polyethylene/polypropylene triple-layered separator may also be utilized.

In one or more embodiments, the separator may include a porous substrate and a coating layer including an organic material, an inorganic material, and/or any combination thereof and arranged on one side or both sides (e.g., opposite sides) of the porous substrate.

The porous substrate may be a porous film, and the porous film may be a woven fabric or a non-woven fabric.

The porous substrate may include an olefin resin, a fluorine resin, an ester resin, an imide resin, an acrylic resin, a cellulose resin, and/or any combination thereof. The olefin resin may include polyethylene, polypropylene, and/or any combination thereof.

The fluorine resin may include polyvinylidene fluoride, polytetrafluoroethylene, and/or any combination thereof. The ester resin may include polyethyleneterephthalate, polybutyleneterephthalate, and/or any combination thereof. The imide resin may include polyamideimide, polyetherimide, and/or any combination thereof. The acrylic resin may include polyacrylonitrile, polyacrylate, and/or any combination thereof. The cellulose resin may include carboxymethylcellulose, microbial cellulose, plant cellulose, animal cellulose, and/or any combination thereof.

In one or more embodiments, the porous substrate may be a polymer film formed of a polyolefin such as polyethylene and/or polypropylene, a polyester such as polyethyleneterephthalate and/or polybutyleneterephthalate, a polymer selected from among polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulfide, polyethylenenaphthalate, a glass fiber, or polytetrafluoroethylene (e.g., Teflon), or a copolymer or a mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and any combination thereof, but embodiments of the present disclosure are not limited thereto.

In one or more embodiments, the organic material and the inorganic material may be present in a mixed state in a coating layer or in a stack structure in which an organic material-containing coating layer and an inorganic material-containing coating layer are stacked.

The lithium battery according to one or more embodiments may further include a solid electrolyte. The solid electrolyte may be, for example, an oxide-based solid electrolyte, a sulfide-based solid electrolyte, or any combination thereof.

In one or more embodiments, the solid electrolyte may be, for example, an oxide-based solid electrolyte. The oxide-based solid electrolyte may include at least one selected from among Li_{1+x+y}AlₓTi₂₋ₓSi_{y}P_{3-y}O₁₂ (wherein 0<x<2 and 0≤y<3), Li₃PO₄, LiₓTi_{y}(PO₄)₃ (wherein 0<x<2 and 0<y<3), LiₓAl_{y}Ti_{z}(PO₄)₃ (wherein 0<x<2, 0<y<1, and 0<z<3), Li_{1+x+y}(Al, Ga)ₓ(Ti, Ge)₂₋ₓSi_{y}P_{3-y}O₁₂ (wherein 0≤x≤1 and 0≤y≤1), LiₓLa_{y}TiO₃ (wherein 0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (wherein M = Te, Nb, or Zr, and x is an integer from 1 to 10). The solid electrolyte may be manufactured by a sintering method, and/or the like. For example, the oxide-based solid electrolyte may be a garnet-type or kind solid electrolyte selected from among Li₇La₃Zr₂O₁₂ (LLZO) and Li₃₊ₓLa₃Zr₂₋ₐMₐO₁₂ (M doped LLZO, wherein M=Ga, W, Nb, Ta, or Al and x is an integer from 1 to 10).

For example, the sulfide-based solid electrolyte may include, for example, lithium sulfide, silicon sulfide, phosphorous sulfide, boron sulfide, and/or any combination thereof. The sulfide-based solid electrolyte in the form of particles may include Li₂S, P₂S₅, SiS₂, GeS₂, B₂S₃, and/or any combination thereof. In one or more embodiments, the sulfide-based solid electrolyte particles may be Li₂S or P₂S₅. Sulfide-based solid electrolyte particles are suitable to have higher lithium ion (e.g., ionic) conductivity than other inorganic compounds. For example, in some embodiments, the sulfide-based solid electrolyte may include Li₂S and P₂S₅. If a sulfide solid electrolyte material constituting the sulfide-based solid electrolyte includes Li₂S-P₂S₅, a mixing molar ratio of Li₂S to P₂S₅ may be, for example, in the range of about 50:50 to about 90:10. In one or more embodiments, an inorganic solid electrolyte prepared by adding Li₃PO₄, a halogen, a halogen compound, Li₂₊₂ₓZn₁₋ₓGeO₄ ("LISICON", wherein 0≤x<1), Li_{3+y}PO₄₋ₓNₓ ("LIPON", wherein 0<x<4 and 0<y<3), Li_{3.25}Ge_{0.25}P_{0.75}S₄ ("Thio-LISICON"), Li₂O-Al₂O₃-TiO₂-P₂O₅ ("LATP"), and/or the like to an inorganic solid electrolyte such as Li₂S-P₂S₅, SiS₂, GeS₂, B₂S₃, and/or any combination thereof may be utilized as the sulfide-based solid electrolyte. Non-limiting examples of the sulfide-based solid electrolyte material may include, but are not limited to, Li₂S-P₂S₅; Li₂S-P₂S₅-LiX (wherein X is a halogen atom); Li₂S-P₂S₅-Li₂O; Li₂S-P₂S₅-Li₂O-LiI; Li₂S-SiS₂; Li₂S-SiS₂-Lil; Li₂S-SiS₂-LiBr; Li₂S-SiS₂-LiCl; Li₂S-SiS₂-B₂S₅-LiI; Li₂S-SiS₂-P₂S₅-LiI; Li₂S-B₂S₃; Li₂S-P₂S₅-ZₘSₙ (wherein 0<m<10, 0<n<10, and Z=Ge, Zn or Ga); Li₂S-GeS₂; Li₂S-SiS₂-Li₃PO₄- and Li₂S-SiS₂-LiₚMO_{q} (wherein 0<p<10, 0<q<10, and M=P, Si, Ge, B, Al, Ga, or In). In this regard, the sulfide-based solid electrolyte material may be manufactured by treating starting materials (e.g., Li₂S and P₂S₅) of the sulfide-based solid electrolyte by a melt quenching method, a mechanical milling method, and/or the like. Also, a calcination process may further be performed after the above process. The sulfide-based solid electrolyte may be in an amorphous form or a crystalline form or in a mixed form thereof.

### Lithium Battery

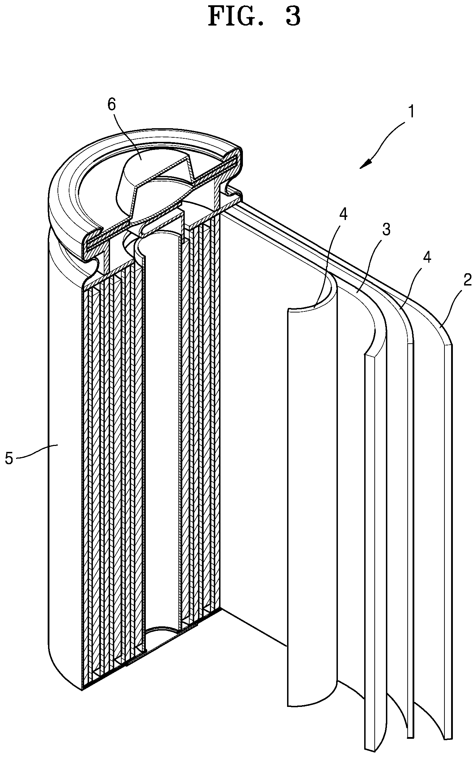

Referring to FIG. 3, a lithium battery 1 according to one or more embodiments may include a positive electrode 3, a negative electrode 2, and a separator 4. The separator may be included in the electrolyte layer according to one or more embodiments.

The gel polymer electrolyte may be arranged on the separator and the gel polymer electrolyte may be included in the separator.

The gel polymer electrolyte may be arranged between the separator and the positive electrode. The positive electrode 3, the negative electrode 2, and the separator 4 may be wound or folded to form a battery assembly. The formed battery assembly may be accommodated in a battery case 5. An organic electrolytic solution may be injected into the battery case 5, and the battery case 5 may be sealed with a cap assembly 6 to complete preparation of the lithium battery 1. The battery case 5 may be a cylindrical type or kind, but embodiments of the present disclosure are not limited thereto, and may be, for example, a rectangular type or kind or a thin film type or kind.

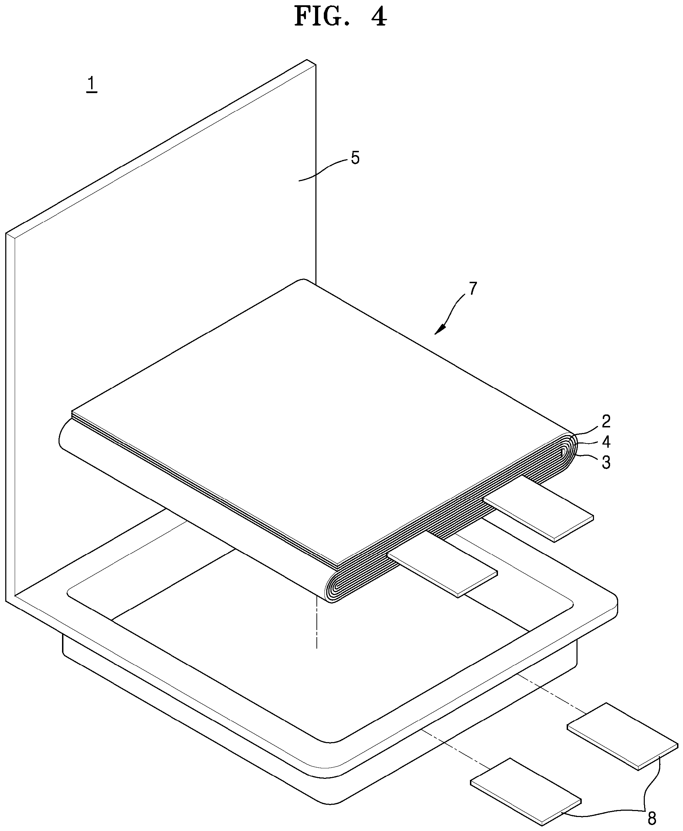

Referring to FIG. 4, a lithium battery 1 according to one or more embodiments may include a positive electrode 3, a negative electrode 2, and a separator 4. The separator may be included in the electrolyte layer according to one or more embodiments.

The gel polymer electrolyte may be arranged on the separator and the gel polymer electrolyte may be included in the separator.

The separator 4 may be arranged between the positive electrode 3 and the negative electrode 2, and the positive electrode 3, the negative electrode 2, and the separator 4 may be wound or folded to form a battery assembly 7. The formed battery assembly 7 may be accommodated in a battery case 5. The lithium battery 1 may include an electrode tab 8 serving as an electrical passage for inducing a current generated in the battery assembly 7 to the outside. An organic electrolytic solution may be injected into the battery case 5, and the battery case 5 is sealed to complete preparation of the lithium battery 1. The battery case 5 may be a rectangular type or kind, but embodiments of the present disclosure are not limited thereto, and for example, a cylindrical type or kind or a thin film type or kind may also be utilized.

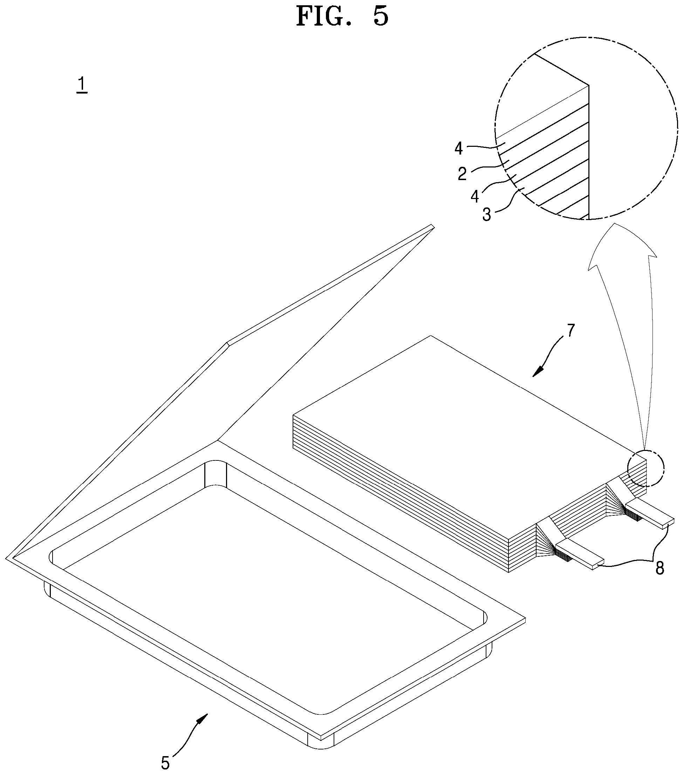

Referring to FIG. 5, a lithium battery 1 according to one or more embodiments may include a positive electrode 3, a negative electrode 2, and a separator 4. The separator may be included in the electrolyte layer according to one or more embodiments. The gel polymer electrolyte may be arranged on the separator, and the gel polymer electrolyte may be included in the separator. The separator 4 may be arranged between the positive electrode 3 and the negative electrode 2 to form a battery assembly 7. The gel polymer electrolyte is not illustrated between the separator and the positive electrode. The battery assembly 7 may be stacked in a bi-cell structure and accommodated in a battery case 5. The lithium battery 1 may include an electrode tab 8 serving as an electrical passage for inducing a current generated in the battery assembly 7 to the outside. An organic electrolytic solution may be injected into the battery case 5, and the battery case 5 may be sealed to complete preparation of the lithium battery 1. The battery case 5 may be a rectangular type or kind, but embodiments of the present disclosure are not limited thereto, and for example, a cylindrical type or kind or a thin film type or kind may also be utilized.

In a pouch-type or kind lithium battery, a pouch may be utilized as the battery case of the lithium batteries shown in FIGs. 4 and 5. The pouch-type or kind lithium battery may include at least one battery assembly. An electrolyte may be arranged between the positive electrode and the negative electrode, or an electrolyte and a separator may be arranged therebetween to form a battery structure. The battery assembly may be stacked in a bi-cell structure, impregnated with a liquid electrolyte, accommodated and sealed in a pouch to complete preparation of the pouch-type or kind lithium battery. For example, in one or more embodiments, the above-described positive electrode, negative electrode, and separator may be simply stacked in a battery assembly and accommodated in a pouch. In one or more embodiments, the positive electrode, the negative electrode, and the separator may be wound in a jelly-roll form or folded in a battery assembly and accommodated in a pouch. Subsequently, an organic electrolytic solution may be injected into the pouch and the pouch is sealed to complete preparation of the lithium battery.

The lithium battery according to the present disclosure may be utilized, for example, in electric vehicles (EVs) due to high discharging capacity, excellent or suitable lifespan characteristics, and high energy density. For example, lithium batteries may be utilized in hybrid vehicles such as plug-in hybrid electric vehicles (PHEVs). In one or more embodiments, lithium batteries may be utilized in the fields requiring a large amount of power storage. For example, lithium batteries may be utilized in E-bikes and electric tools.

A plurality of lithium batteries may be stacked to form a battery module, and a plurality of battery modules constitute a battery pack. Such battery packs may be utilized in any device that requires high capacity and high output. For example, battery packs may be utilized in laptop computers, smart phones, and electric vehicles. For example, a battery module may include a plurality of batteries and a frame holding the batteries. The battery pack may include, for example, a plurality of battery modules and a bus bar connecting the battery modules. The battery module and/or the battery pack may further include a cooling device. A plurality of battery packs may be controlled or selected by a battery management system. The battery management system may include a battery pack, and a battery control device connected to the battery pack.

### Method of Manufacturing Lithium Battery

A lithium battery according to one or more embodiments may be manufactured by a method including: preparing a negative current collector; preparing a separator; preparing a positive electrode; preparing a battery assembly by stacking the negative current collector, the separator, and the positive electrode; injecting a gel polymer electrolyte-forming composition into the battery assembly, and performing crosslinking, wherein the gel polymer electrolyte-forming composition includes polymerizable monomers for forming a gel polymer, i.e., i) a multifunctional acrylic first polymerizable monomer including three or more polymerizable functional groups, and ii) a second polymerizable monomer including a perfluoropolyoxyalkylene (PFPE) unit and two or more polymerizable functional groups, and a liquid electrolyte.

In the gel polymer electrolyte-forming composition, a total amount of the first polymerizable monomer and the second polymerizable monomer may be, for example, from about 0.1 wt% to about 10 wt%, about 0.2 wt% to about 8 wt%, from about 0.5 wt% to about 6 wt%, from about 1 wt% to about 5 wt%, or from about 2 wt% to about 4 wt% based on a total weight of the gel polymer electrolyte-forming composition. If the amounts are within the ranges described above, a stable gel polymer electrolyte may be formed.

In the lithium battery according to one or more embodiments, a gel polymer electrolyte-containing separator may be formed in situ by injecting the gel polymer electrolyte-forming composition into the battery assembly and performing heat treatment as described above. In one or more embodiments, a separator including the gel polymer electrolyte may be separately prepared as a self-standing film and arranged on the negative current collector, and then the positive electrode may be arranged thereon to prepare a lithium battery.

The separator may further include a liquid electrolyte and/or a gel-type or kind polymer electrolyte.

A method of crosslinking the gel polymer electrolyte-forming composition is not limited, but the composition may be crosslinked by, for example, heat, ultraviolet rays, and/or the like. In terms of manufacturing efficiency, in one or more embodiments, thermal crosslinking may be utilized. The gel polymer electrolyte-forming composition may include, for example, a thermal initiator. The thermal initiator may be, for example, t-amyl peroxide or azobis-based compounds, but embodiments of the present disclosure are not limited thereto, and any compounds commonly utilized as a thermal initiator may also be utilized. An amount of the thermal initiator may be 0.1 wt% or less or 0.05 wt% or less based on a total weight of the gel polymer electrolyte-forming composition. A crosslinked product of the gel polymer electrolyte-forming composition may be, for example, a product obtained after heat treatment at 60 °C to 90 °C for 1 hour to 3 hours. Heat treatment conditions may be adjusted according to the type or kind of the thermal initiator utilized.

In one or more embodiments, the method may further include forming a protective layer on the negative current collector.

The forming of the protective layer may be performed by applying a protective layer-forming composition including at least one selected from among a binder precursor and a binder and boron nitride onto the negative current collector, followed by heat treatment. For example, the binder precursor may be, for example, a first polymer and a second polymer, and the binder may be the binder described in the above-described protective layer.

A solvent such as N-methylpyrrolidone and/or dimethylformamide may be added to the protective layer-forming composition. An amount of the solvent may be from about 0.05 parts by weight to about 5 parts by weight based on 100 parts by weight of a total weight of the boron nitride and the binder.

In one or more embodiments, the protective layer may further include a lithium salt. An amount of the lithium salt may be from about 30 parts by weight to about 80 parts by weight, from about 40 parts by weight to about 60 parts by weight, or from about 45 parts by weight to about 55 parts by weight based on 100 parts by weight of the total weight of the binder and the lithium salt.

In one or more embodiments, the protective layer-forming composition may further include a first polymer containing hydroxyl groups and a second polymer containing crosslinkable functional groups. The protective layer formed from the protective layer-forming composition may further include a crosslinked polymer of the first polymer and the second polymer. A mixing weight ratio of the first polymer containing hydroxyl groups to the second polymer may be adjusted to a range of about 50:50 to about 99:1, about 50:50 to about 99:1, or about 60:40 to about 90:10.

The second polymer may include at least one selected from among a fluorine-containing polyamic having a carboxyl group and a fluorine-containing polyim ide.

If the second polymer is a fluorine-containing polyamic acid having a carboxyl group, a protective layer-forming composition including the same may be applied onto the negative current collector and dried, and then heat-treated for crosslinking of the first polymer and the second polymer, thereby forming a protective layer having a crosslinked polymer. The heat treatment may vary according to the composition of the first polymer and the second polymer, but may be performed, for example, at a temperature of about 80 °C to about 200 °C, about 100 °C to about 200 °C, about 150 °C to about 200 °C, or about 150 °C to about 190 °C. Within the heat treatment temperature ranges described above, the protective layer formed on the surface of an electrode may minimize or reduce exposure of an electrolytic solution on the surface of the electrode and may form a substantially uniform flow of lithium ions throughout the electrode, thereby effectively inhibiting the growth of lithium dendrite.

Hereinafter, one or more example embodiments will be described in more detail with reference to the following examples and comparative examples. However, these examples are not intended to limit the purpose and scope of the one or more embodiments.

### Example 1: GPE (Gel Polymer formed of DPHA and AD1700 in a weight ratio of 3:1 + LE (0.6 M LiDFOB + 0.6 M LiBF₄ in FEC:DEC (1:2 v/v)), wherein a total weight of DPHA and AD1700 is 4 wt% based on a total weight of GPEC)

A 20 µm-thick polyethylene single layer, as a separator, was stacked on one side of a 10 µm-thick copper foil, as a negative current collector, and a positive electrode was stacked on the other side of the separator to prepare a stack structure. A gel polymer electrolyte-forming composition (GPEC) was injected into the prepared stack structure, followed by heat treatment at 70 °C for 120 minutes to prepare a lithium battery including a gel polymer electrolyte in pores of the separator. The lithium battery had a positive electrode/gel polymer electrolyte (separator)/negative current collector structure.

The gel polymer electrolyte-forming composition was prepared by mixing dipentaerythritol hexaacrylate (DPHA) as a hexafunctional crosslinking agent that is a crosslinkable monomer, Fluorolink AD1700 (MW: 1,500) of Solvay, a liquid electrolyte (LE), and benzoin ethyl ether (Sigma-Aldrich, 240.30 g/mol) as an initiator. The liquid electrolyte was prepared by adding 0.6 M LiBF₄ and 0.6 M lithium difluoro(oxalate)borate (LiDFOB) to a mixed solvent of diethyl carbonate (DEC) and fluoroethylene carbonate (FEC) mixed in a volume ratio of 2:1. AD1700 is a solution prepared by mixing perfluoropolyether-urethane acrylate with a mixtures of ethyl acetate and butyl acetate (mixed in a weight ratio of 1:1). A dry content (e.g., amount) of perfluoropolyether-urethane acrylate was about 70 wt%, a content (e.g., amount) of ethyl acetate was 15 wt%, and a content (e.g., amount) of butyl acetate was 15 wt%.

A mixing weight ratio of DPHA to AD1700 was 3:1. A viscosity of DPHA was from about 4,000 to about 7,000 cps, and a viscosity of AD1700 was 500 cps or more.

The gel polymer electrolyte-forming composition included 2 parts by weight of DPHA as a polymerizable monomer, 2 parts by weight of AD1700 of Formula 21, 96 parts by weight of the liquid electrolyte, and an initiator based on 100 parts by weight of a total weight of the composition (GPEC). The initiator was utilized in an amount of 5 parts by weight based on 100 parts by weight of the crosslinkable monomer.

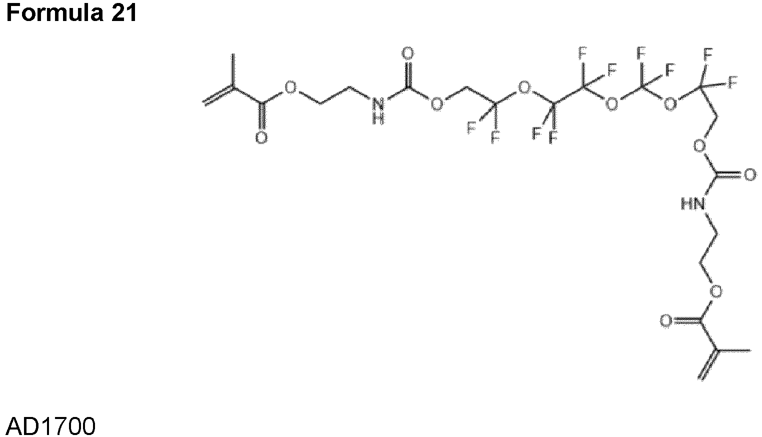

The positive electrode was prepared according to the following method.

Li_{1.04}Ni_{0.88}Co_{0.1}Al₀.₀₂O₂ powder as a positive active material and a carbonaceous conductive material (Super-P; Timcal Ltd.) were uniformly (e.g., substantially uniformly) mixed in a weight ratio of 90:5, and a polyvinylidene fluoride (PVDF) binder solution was added thereto such that a weight ratio of positive active material: carbonaceous conductive material: binder was 90:5:5, to prepare a slurry for forming positive active material layer.

The prepared slurry was applied onto a 15 µm-thick aluminum substrate as a positive electrode current collector utilizing a doctor blade and dried at 120 °C under a reduced pressure, and then rolled utilizing a roll press into a sheet to prepare a positive electrode including positive electrode current collector and the positive electrode active material layer.

### Example 2: GPE (Gel Polymer formed of DPHA and AD1700 in a weight ratio of 2:2 + LE (0.6 M LiDFOB + 0.6 M LiBF₄ in FEC:DEC (1:2 v/v)), wherein a total weight of DPHA and AD1700 is 4 wt% based on a total weight of GPEC

A lithium battery was prepared in substantially the same manner as in Example 1, except that a mixing weight ratio of DPHA to AD1700, which were polymerizable monomers utilized in the preparation of the gel polymer electrolyte-forming composition, was modified to 2:2.

### Example 3: GPE (Gel Polymer formed of TMPMTA and AD1700 in a weight ratio of 3:1 + LE (0.6 M LiDFOB + 0.6 M LiBF₄ in FEC:DEC (1:2 v/v)), wherein a total weight of TMPMTA and AD1700 is 4 wt% based on a total weight of GPEC

A lithium battery was prepared in substantially the same manner as in Example 1, except that trimethylolpropane trimethacrylate (TMPMTA) was utilized instead of DPHA in the preparation of the gel polymer electrolyte-forming composition. TMPMTA had a viscosity of about 40 to about 60 cps, and AD1700 had a viscosity of 500 cps or more.

### Example 4: GPE (Gel Polymer formed of DPHA and AD1700 in a weight ratio of 4:1 + LE (0.6 M LiDFOB + 0.6 M LiBF₄ in FEC:DEC (1:2 v/v)), wherein a total weight of DPHA and AD1700 is 5 wt % based on a total weight of GPEC

A lithium battery was prepared in substantially the same manner as in Example 1 except that a mixing weight ratio of DPHA to AD1700 was modified to 4:1, and the total amount of DPHA and AD1700 of the gel polymer electrolyte-forming composition was modified to 5 wt% based on (100 wt% of) the total amount of GPEC.

### Example 5: GPE (Gel Polymer formed of DPHA and AD1700 in a weight ratio of 3:2 + LE (0.6 M LiDFOB + 0.6 M LiBF₄ in FEC:DEC (1:2 v/v)), wherein a total weight of DPHA and AD1700 is 5 wt% based on a total weight of GPEC)

A lithium battery was prepared in substantially the same manner as in Example 4, except that a mixing weight ratio of DPHA to AD1700 was modified to 3:2, and the total amount of DPHA and AD1700 of the gel polymer electrolyte-forming composition was modified to 5 wt% based on the total amount of GPEC.

### Comparative Example 1: GPE (Gel Polymer formed of DPHA + LE (0.6 M LiDFOB + 0.6 M LiBF₄ in FEC:DEC (1:2 v/v)), wherein a total weight of DPHA is 4 wt% based on a total weight of GPEC)

A lithium battery was prepared in substantially the same manner as in Example 1, except that only DPHA was utilized as the polymerizable monomer in the preparation of the gel polymer electrolyte-forming composition (GPEC).

### Comparative Example 2: GPE (Gel Polymer formed of DPHA + LE (0.6 M LiDFOB + 0.6 M LiBF₄ in FEC:DEC (1:2 v/v)), wherein a total weight of DPHA is 5 wt% based on a total weight of GPEC

A lithium battery was prepared in substantially the same manner as in Example 4, except that only DPHA was utilized as the polymerizable monomer in the preparation of the gel polymer electrolyte-forming composition.

### Comparative Example 3: GPE (Gel Polymer formed of DPHA + LE (0.6 M LiDFOB + 0.6 M LiBF₄ in FEC:DEC (1:2 v/v)), wherein a total weight of DPHA is 3 wt% based on a total weight of GPEC

A lithium battery was prepared in substantially the same manner as in Example 1, except that the amount of DPHA of the gel polymer electrolyte-forming composition was modified to 3 wt% based on the total amount of GPEC.

### Comparative Example 4: GPE (Gel Polymer formed of TMPTMA + LE (0.6 M LiDFOB + 0.6 M LiBF₄ in FEC:DEC (1:2 v/v)), wherein a total weight of TMPTMA is 4 wt% based on a total weight of GPEC)

A lithium battery was prepared in substantially the same manner as in Example 3, except that only TMPTMA was utilized as the polymerizable monomer of the gel polymer electrolyte-forming composition (GPEC).

### Evaluation Example 1: Lifespan at High Temperature (45 °C)

Charging and discharging characteristics of each of the lithium batteries of Examples 1 to 5 and Comparative Examples 1 to 3 were evaluated under the following conditions.

The lithium metal battery was charged at 45 °C at a constant current of 0.1 C rate until a voltage reached 4.3 V (vs. Li) and the charging process was cut-off at a rate of 0.05 C rate in a constant voltage mode while the voltage of 4.3 V was maintained. Subsequently, the lithium battery was discharged at a constant current of 0.1 C rate until the voltage reached 3.6 V (vs. Li) during discharging (formation cycle).

The lithium battery that had undergone the formation cycle was charged with a constant current with a current of 0.33 C rate at 45 °C until the voltage reached 4.3 V (vs. Li), and then the charging process was cut-off at a current of 0.05 C rate in a constant voltage mode while maintaining the voltage of 4.3 V. Subsequently, the lithium battery was discharged with a constant current of 1 C rate until the voltage reached 3.6 V (vs. Li) during discharging (1^{st} cycle). This cycle was repeated to a 300^{th} cycle under the same conditions.

The lithium batteries were each rested for 10 minutes after every charging/discharging cycle. Some high-temperature charging/discharging test results are shown in Table 1. The number of cycles refers to the number of cycles required to reduce a discharge capacity to 80% of a standard capacity after a second cycle. As the number of cycles increases, it was considered to have excellent or suitable lifespan characteristics.

Lifespan characteristics were calculated according to Equation 1. Lifespan characteristics (%) = (Discharge capacity at 300th cycle/discharge capacity at snd cycle) × 100

**Table 1**

| Category | Conditions | Initial efficiency (%) | Lifespan (200^{th}/2^{nd})( %) | No. of cycles |
|---|---|---|---|---|
| Example 1 | GPE (Gel Polymer formed of DPHA and AD1700 in a weight ratio of 3:1 + LE (0.6 M LiDFOB + 0.6 M LiBF₄ in FEC:DEC (1:2 v/v)), wherein a total weight of DPHA and AD1700 is 4 wt% based on a total weight of GPEC) | 76.68 | 75.29 | 222 |
| Example 2 | GPE (Gel Polymer formed of DPHA and AD1700 in a weight ratio of 2:2 + LE (0.6 M LiDFOB + 0.6 M LiBF₄ in FEC:DEC (1:2 v/v)), wherein a total weight of DPHA and AD1700 is 4 wt% based on a total weight of GPEC | 76.85 | 69.09 | 167 |
| Example 3 | GPE (Gel Polymer formed of TMPMTA and AD1700 in a weight ratio of 3:1 + LE (0.6 M LiDFOB + 0.6 M LiBF₄ in FEC:DEC (1:2 v/v)), wherein a total weight of TMPMTA and AD1700 is 4 wt% based on a total weight of GPEC | 76.61 | 73.24 | 195 |
| Example 4 | GPE (Gel Polymer formed of DPHA and AD1700 in a weight ratio of 4:1 + LE (0.6 M LiDFOB + 0.6 M LiBF₄ in FEC:DEC (1:2 v/v)), wherein a total weight of DPHA and AD1700 is 5 wt% based on a total weight of GPEC | 76.45 | 63.67 | 171 |
| Example 5 | GPE (Gel Polymer formed of DPHA and AD1700 in a weight ratio of 3:2 + LE (0.6 M LiDFOB + 0.6 M LiBF₄ in FEC:DEC (1:2 v/v)), wherein a total weight of DPHA and AD1700 is 5 wt% based on a total weight of GPEC) | 76.39 | 68.31 | 171 |
| Comparativ e Example 1 | GPE (Gel Polymer formed of DPHA + LE (0.6 M LiDFOB + 0.6 M LiBF₄ in FEC:DEC (1:2 v/v)), wherein a total weight of DPHA is 4 wt% based on a total weight of GPEC) | 76.5 | 0 | 133 |
| Comparativ e Example 2 | GPE (Gel Polymer formed of DPHA + LE (0.6 M LiDFOB + 0.6 M LiBF₄ in FEC:DEC (1:2 v/v)), wherein a total weight of DPHA is 5 wt% based on a total weight of GPEC | 76.51 | 61.57 | 160 |
| Comparativ e Example 3 | GPE (Gel Polymer formed of DPHA + LE (0.6 M LiDFOB + 0.6 M LiBF₄ in FEC:DEC (1:2 v/v)), wherein a total weight of DPHA is 3 wt% based on a total weight of GPEC | 76.57 | 0 | 114 |

As shown in Table 1, each of the lithium batteries of Examples 1 and 2 including the GPEs as crosslinked products of DPHA and AD1700 exhibited similar initial efficiencies but improved lifespan characteristics compared to the lithium battery of Comparative Example 1 including the GPE formed of only DPHA.

The lithium batteries of Examples 1 to 5 each exhibited increased initial efficiencies and improved lifespan characteristics at room temperature compared to those of Comparative Examples 1 to 3.

### Evaluation Example 2: Ionic Conductivity

Ionic conductivities of the gel polymer electrolytes of the lithium batteries according to Examples 1 to 5 and Comparative Examples 1 and 2 were each evaluated at room temperature (25 °C) and at a high temperature (45 °C) according to the following method.

The ionic conductivities were measured at 25 °C by utilizing a lithium symmetric cell and an impedance analyzer (Solartron 1260A Impedance/Gain-Phase Analyzer coupled with Solartron 1287 Electrochemcial Interface). Ionic conductivity was derived by an AC impedance method combined with a steady-state current method. First, an initial lithium interfacial resistance Ro was measured by an impedance spectrum at a frequency range of about 0.1 Hz to about 100 kHz, and then a small direct current voltage (<10 mV) was applied thereto until a steady-state current (Iss) was obtained (time >3000 seconds). Finally, a steady-state lithium interfacial resistance Rss was measured from an impedance spectrum in a frequency range of about 0.1 Hz to about 100 kHz.

The lithium symmetric cell had a Li/electrolyte/Li structure by arranging a gel polymer electrolyte film between lithium electrodes and the structure was sealed in the cell. Measurement results are shown in Table 2.

**Table 2**

| Category | Conditions | Room temperature-ionic conductivity (mS/cm) | High-temperature ionic conductivity (mS/cm) |
|---|---|---|---|
| Example 1 | GPE (Gel Polymer formed of DPHA and AD1700 in a weight ratio of 3:1 + LE (0.6 M LiDFOB + 0.6 M LiBF₄ in FEC:DEC (1:2v/v)), wherein a total weight of DPHA and AD1700 is 4 wt% based on a total weight of GPEC) | 0.46 | 0.65 |
| Example 2 | GPE (Gel Polymer formed of DPHA and AD1700 in a weight ratio of 2:2 + LE (0.6 M LiDFOB + 0.6 M LiBF₄ in FEC:DEC (1:2 v/v)), wherein a total weight of DPHA and AD1700 is 4 wt% based on a total weight of GPEC | 0.47 | 0.66 |
| Example 3 | GPE (Gel Polymer formed of TMPMTA and AD1700 in a weight ratio of 3:1 + LE (0.6 M LiDFOB + 0.6 M LiBF₄ in FEC:DEC (1:2 v/v)), wherein a total weight of TMPMTA and AD1700 is 4 wt% based on a total weight of GPEC | 0.42 | 0.60 |
| Example 4 | GPE (Gel Polymer formed of DPHA and AD1700 in a weight ratio of 4:1 + LE (0.6 M LiDFOB + 0.6 M LiBF₄ in FEC:DEC (1:2 v/v)), wherein a total weight of DPHA and AD1700 is 5 wt% based on a total weight of GPEC | 0.38 | 0.55 |
| Example 5 | GPE (Gel Polymer formed of DPHA and AD1700 in a weight ratio of 3:2 + LE (0.6 M LiDFOB + 0.6 M LiBF₄ in FEC:DEC (1:2 v/v)), wherein a total weight of DPHA and AD1700 is 5 wt% based on a total weight of GPEC) | 0.39 | 0.57 |
| Comparativ e Example 1 | GPE (Gel Polymer formed of DPHA + LE (0.6 M LiDFOB + 0.6 M LiBF₄ in FEC:DEC (1:2 v/v)), wherein a total weight of DPHA is 4 wt% based on a total weight of GPEC) | 0.37 | 0.46 |
| Comparativ e Example 2 | GPE (Gel Polymer formed of DPHA + LE (0.6 M LiDFOB + 0.6 M LiBF₄ in FEC:DEC (1:2 v/v)), wherein a total weight of DPHA is 5 wt% based on a total weight of GPEC | 0.35 | 0.42 |

As shown in Table 2, the gel polymer electrolytes of the lithium batteries of Examples 1 to 5 had ionic conductivities not less than 0.38 mS/cm at 25 °C at 1 atm and ionic conductivities not less than 0.47 mS/cm at 45 °C at 1 atm indicating increased ionic conductivities compared to the lithium batteries of Comparative Examples 1 and 2.

### Evaluation Example 3: High-rate Characteristics

Each of the lithium batteries prepared in Examples 1 to 5 and Comparative Examples 1 to 3 was charged at a constant current of 0.1 C rate at 25 °C until a voltage reached 4.3 V (vs. Li), and the charging process was cut-off at a rate of 0.05 C rate in a constant voltage mode while the voltage of 4.3 V was maintained. Subsequently, the lithium battery was discharged at a constant current of 0.1 C rate until the voltage reached 3.6 V (vs. Li) during discharging (formation cycle).

The lithium battery that had undergone the formation cycle was charged with a constant current at a current of 0.2 C rate at 25 °C until the voltage reached 4.3 V (vs. Li), and then the charging process was cut-off at a current of 0.05 C rate in a constant voltage mode while maintaining the voltage of 4.3 V. Subsequently, the lithium battery was discharged with a constant current of 0.2 C rate until the voltage reached 3.6 V (vs. Li) during discharging (1^{st} cycle). The charging and discharging were repeated up to the 4^{th} cycle

The lithium battery that had undergone the 4^{th} cycle was charged with a constant current at a current of 0.2 C rate at 25 °C until the voltage reached 4.3 V (vs. Li), and then the charging process was cut-off at a current of 0.05 C rate in a constant voltage mode while maintaining the voltage of 4.3 V. Subsequently, the lithium batteries were discharged with a constant current of 0.5 C rate until the voltage reached 2.8 V (vs. Li) (5^{th} cycle).

This cycle was repeated from 5^{th} cycle to 9^{th} cycle under the same conditions.

The lithium battery that had undergone the 9^{th} cycle was charged with a constant current at a current of 0.33 C rate at 25 °C until the voltage reached 4.35 V (vs. Li), and then the charging process was cut-off at a current of 0.05 C rate in a constant voltage mode while maintaining the voltage of 4.35 V. Subsequently, the lithium batteries were discharged at a constant current of 1 C rate until the voltage reached 2.8 V (vs. Li) (10^{th} cycle).

This cycle was repeated from 9^{th} cycle to 14^{th} cycle under the same conditions.

The lithium battery that had undergone the 14^{th} cycle was charged with a constant current at a current of 0.33 C rate at 25 °C until the voltage reached 4.35 V (vs. Li), and then the charging process was cut-off at a current of 0.05 C rate in a constant voltage mode while maintaining the voltage of 4.35 V. Subsequently, the lithium batteries were discharged at a constant current of 2 C rate until the voltage reached 2.8 V (vs. Li) (15^{th} cycle).

This cycle was repeated from 15^{th} cycle to 19^{th} cycle under the same conditions.

The lithium battery that had undergone the 19^{th} cycle was charged with a constant current at a current of 0.33 C rate at 25 °C until the voltage reached 4.35 V (vs. Li), and then the charging process was cut-off at a current of 0.05 C rate in a constant voltage mode while maintaining the voltage of 4.35 V. Subsequently, the lithium batteries were discharged at a constant current of 3 C rate until the voltage reached 2.8 V (vs. Li) (19^{th} cycle). This cycle was repeated up to 24^{th} cycle.

The lithium battery that had undergone the 24^{th} cycle was charged with a constant current at a current of 0.33 C rate at 25 °C until the voltage reached 4.35 V (vs. Li), and then the charging process was cut-off at a current of 0.05 C rate in a constant voltage mode while maintaining the voltage of 4.35 V. Subsequently, the lithium batteries were discharged at a constant current of 0.5 C rate until the voltage reached 2.8 V (vs. Li) (25^{th} cycle). This cycle was repeated from 25^{th} cycle to 30^{th} cycle under the same conditions.

All of the lithium batteries were rested for 10 minutes after every charging/discharging cycle.

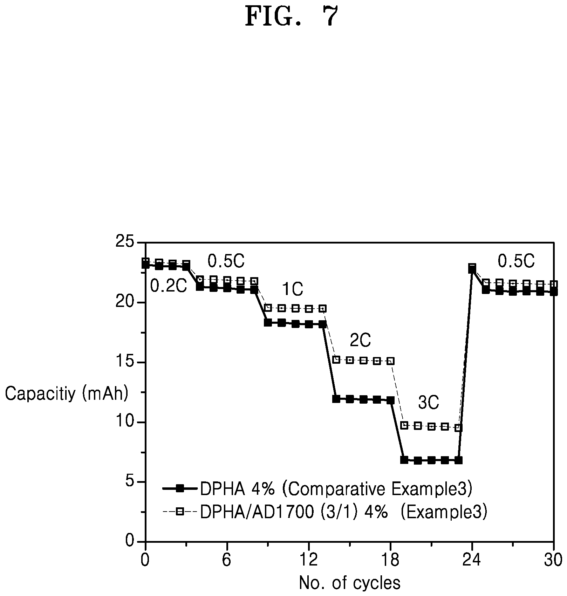

Some results of the charging/discharging test were shown in Table 3 and FIG. 7. FIG. 7 is a graph illustrating high-rate characteristics of lithium batteries of Example 3 and Comparative Example 3.

High-rate characteristics are defined as shown in Equation 2. High-rate characteristics [%] = [Discharge capacity at 23rd cycle (3 C rate)/discharge capacity at 2nd cycle (0.2 C rate)] × 100

**Table 3**

| Category | Conditions | High-rate characteristics (%) |
|---|---|---|
| Example 1 | GPE (Gel Polymer formed of DPHA and AD1700 in a weight ratio of 3:1 + LE (0.6 M LiDFOB + 0.6 M LiBF₄ in FEC:DEC (1:2 v/v)), wherein a total weight of DPHA and AD1700 is 4 wt% based on a total weight of GPEC) | 36.2% |
| Example 2 | GPE (Gel Polymer formed of DPHA and AD1700 in a weight ratio of 2:2 + LE (0.6 M LiDFOB + 0.6 M LiBF₄ in FEC:DEC (1:2 v/v)), wherein a total weight of DPHA and AD1700 is 4 wt% based on a total weight of GPEC | 35.3% |
| Example 3 | GPE (Gel Polymer formed of TMPMTA and AD1700 in a weight ratio of 3:1 + LE (0.6 M LiDFOB + 0.6 M LiBF₄ in FEC:DEC (1:2 v/v)), wherein a total weight of TMPMTA and AD1700 is 4 wt% based on a total weight of GPEC | 33.5% |
| Example 4 | GPE (Gel Polymer formed of DPHA and AD1700 in a weight ratio of 4:1 + LE (0.6 M LiDFOB + 0.6 M LiBF₄ in FEC:DEC (1:2 v/v)), wherein a total weight of DPHA and AD1700 is 5 wt% based on a total weight of GPEC | 31.8 |
| Example 5 | GPE (Gel Polymer formed of DPHA and AD1700 in a weight ratio of 3:2 + LE (0.6 M LiDFOB + 0.6 M LiBF₄ in FEC:DEC (1:2 v/v)), wherein a total weight of DPHA and AD1700 is 5 wt% based on a total weight of GPEC) | 32.3 |
| Comparative Example 1 | GPE (Gel Polymer formed of DPHA + LE (0.6 M LiDFOB + 0.6 M LiBF₄ in FEC:DEC (1:2 v/v)), wherein a total weight of DPHA is 4 wt% based on a total weight of GPEC) | 29.1 |
| Comparative Example 2 | GPE (Gel Polymer formed of DPHA + LE (0.6 M LiDFOB + 0.6 M LiBF₄ in FEC:DEC (1:2 v/v)), wherein a total weight of DPHA is 5 wt% based on a total weight of GPEC | 28.3 |
| Comparative Example 3 | GPE (Gel Polymer formed of DPHA + LE (0.6 M LiDFOB + 0.6 M LiBF₄ in FEC:DEC (1:2 v/v)), wherein a total weight of DPHA is 3 wt% based on a total weight of GPEC | 30.2 |

As shown in Table 3, it was confirmed that each of the lithium batteries of Examples 1 to 5 had improved high-rate characteristics compared to Comparative Examples 1 to 3. Referring to FIG. 7, high-rate characteristics of the lithium battery of Example 3 were improved compared to the lithium battery of Comparative Example 3.

### Evaluation Example 4: Evaluation of Viscosity of Gel Polymer Electrolyte-forming Composition

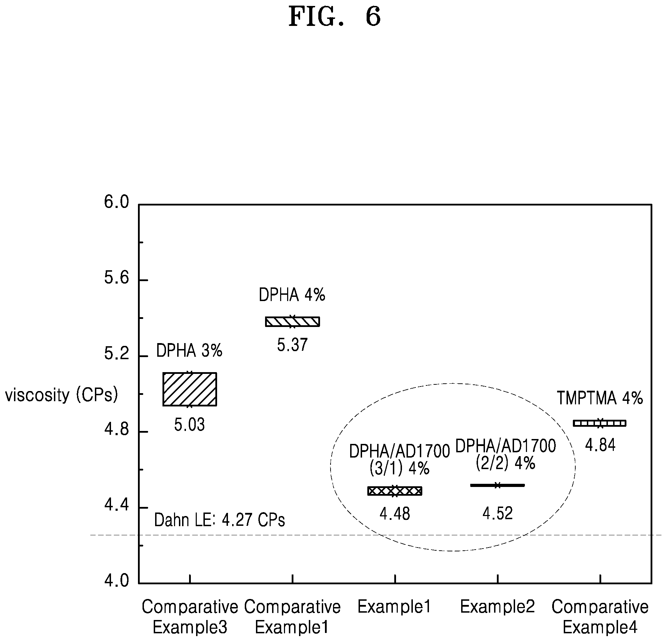

Viscosities of the gel polymer electrolyte-forming compositions of Examples 1 and 2 and Comparative Examples 1, and 3 to 4 were each measured before injecting the gel polymer electrolyte-forming compositions into the battery case, and the results are shown in FIG. 6. The viscosities were measured by utilizing a Brookfield viscometer with a 62 spindle at 5 rpm. A reference solvent utilized for measuring the viscosity was a mineral oil (KS1000 & 5000) as a standard solution for viscometer calibration.

Referring to FIG. 6, in the gel polymer electrolyte-forming compositions of Examples 1 and 2 including AD1700, the viscosity significantly decreased. The viscosity of the gel polymer electrolyte-forming compositions of Example 1 (3 % DPHA + 1 % AD1700) was lower than that of the gel polymer electrolyte-forming compositions of Comparative Example 3 (3 % DPHA). Even in comparison with the gel polymer electrolyte-forming compositions of Comparative Example 4 (4 % TMPTMA), the gel polymer electrolyte-forming compositions of Examples 1 and 2 each had a lower viscosity. Based thereon, it was confirmed that AD1700 served as a diluent.

It was confirmed that the viscosity of each of the gel polymer electrolyte compositions of Examples 1 and 2 rather decreased. If the viscosity of the gel polymer electrolyte-forming composition is higher than that of an electrolytic solution due to the polymer component, it is difficult to inject the gel polymer electrolyte-forming composition into a battery case. However, the gel polymer electrolyte-forming compositions of Examples 1 and 2 shows to provide excellent or suitable processibility because the gel polymer electrolyte-forming compositions are easily injected into a battery case due to low viscosities.

Although embodiments are described above with reference to illustrated drawing, the present disclosure is not limited thereto. It is obvious that one or more suitable alternations and modifications will be apparent to one or ordinary skill in the art to which this application belongs within protection coverage of the disclosure.

According to one or more embodiments, a gel polymer electrolyte having increased ionic conductivity is provided. By utilizing the gel polymer electrolyte, a lithium battery having improved cycle characteristics with inhibited or reduced volume change during charging and discharging may be provided.

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The battery module, battery pack, battery management system, electric vehicle, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in one or more embodiments. While one or more embodiments have been described with reference to the drawings, it will be understood by those of ordinary skill in the art that one or more suitable changes in form and details may be made therein without departing from the spirit and scope of the present disclosure as defined by the appended claims and equivalents thereof.

## Claims

1. A gel polymer electrolyte comprising a gel polymer and a liquid electrolyte,
wherein the liquid electrolyte comprises a lithium salt and an organic solvent, and
the gel polymer is a crosslinked product of i) a multifunctional acrylic first polymerizable monomer comprising three or more polymerizable functional groups, and ii) a second polymerizable monomer comprising a perfluoropolyoxyalkylene (PFPE) unit and two or more polymerizable functional groups, and
wherein the gel polymer electrolyte is for a lithium battery (1).

2. The gel polymer electrolyte as claimed in claim 1, wherein the multifunctional acrylic first polymerizable monomer is trimethylolpropane triacrylate, trimethylolpropane trimethacrylate, trimethylolpropane ethoxylate triacrylate, trimethylolpropane propoxylate triacrylate, ditrimethylolpropane tetraacrylate, pentaerythritol triacrylate, pentaerythritol tetraacrylate, pentaerythritol ethoxylate tetraacrylate, dipentaerythritol pentaacrylate, dipentaerythritol hexaacrylate, or a combination thereof.

3. The gel polymer electrolyte as claimed in claim 1 or 2, wherein the second polymerizable monomer is a compound represented by Formula 1, a compound represented by Formula 2, or a combination thereof: 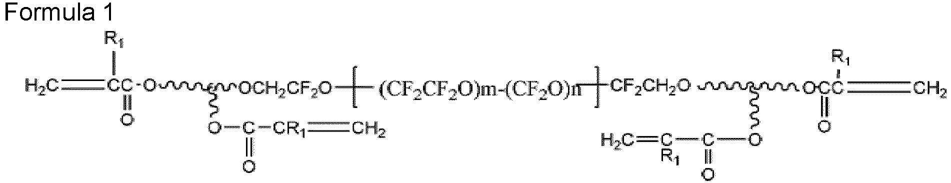
in Formula 1, R₁ being hydrogen or a C1-C6 alkyl group, m and n each independently being an integer greater than 0, and a sum of m and n being in a range of 2 to 300, m being an integer in a range of 1 to 150, and n being an integer in a range of 1 to 150, and 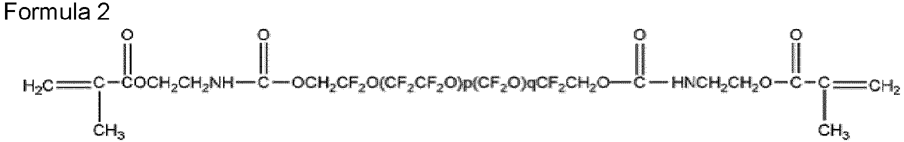
in Formula 2, p and q each independently being an integer greater than 0, a sum of p and q being in a range of 2 to 300, p being an integer in a range of 1 to 150, and q being an integer in a range of 1 to 150.

4. The gel polymer electrolyte as claimed in any of claims 1 to 3, wherein the second polymerizable monomer is a compound represented by Formula 3, a compound represented by Formula 4, or a combination thereof: 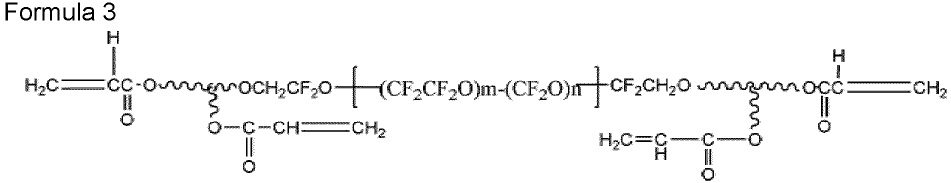
in Formula 3, m being an integer in a range of 1 to 150, n being an integer in a range of 1 to 150, and a sum of m and n being in a range of 2 to 300, and 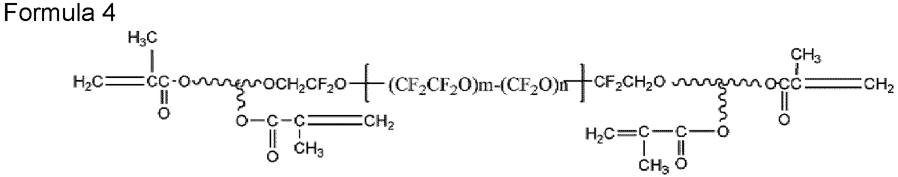
in Formula 4, m being an integer in a range of 1 to 150, n being an integer in a range of 1 to 150, and a sum of m and n being in a range of 2 to 300.

5. The gel polymer electrolyte as claimed in any of claims 1 to 4, wherein a mixing weight ratio of the multifunctional acrylic first polymerizable monomer to the second polymerizable monomer is from 1:9 to 9:1.

6. The gel polymer electrolyte as claimed in any of claims 1 to 5, wherein a mixing weight ratio of the gel polymer to the liquid electrolyte is from 1:99 to 99:1.

7. The gel polymer electrolyte as claimed in any of claims 1 to 6, wherein the organic solvent comprises at least one selected from among a carbonate-based compound, a glyme-based compound, a dioxolane-based compound, and a nitrile-based compound.

8. The gel polymer electrolyte as claimed in any of claims 1 to 7, wherein the lithium salt comprises at least one selected from among LiPF₆, LiBF₄, LiSbF₆, LiAsF₆, LiN(SO₂C₂F₅)₂, LiN(SO₂F)₂, Li(CF₃SO₂)₂N (LiTFSI), LiC₄F₉SO₃, LiClO₄, LiAlO₂, LiAlCl₄, LiN(CₓF₂ₓ₊₁SO₂)(C_{y}F_{2y+1}SO₂) (wherein x and y are natural numbers), LiF, LiBr, LiCl, Lil, lithium bis(oxalato) borate, and lithium difluoro(oxalate)borate, and
the lithium salt has a concentration of 0.1 M to 5 M.

9. The gel polymer electrolyte as claimed in any of claims 1 to 8, wherein the lithium salt comprises a first lithium salt and a second lithium salt, the first lithium salt and the second lithium salt each independently comprising a fluorine-containing borate-based lithium salt, and
the fluorine-containing borate-based lithium salt comprises LiBF₄, LiBF₃(C₂F₅), a compound represented by one selected from among Formulae 5 to 16, or a combination thereof: 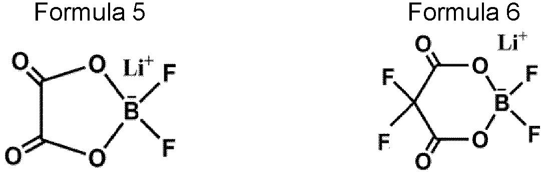 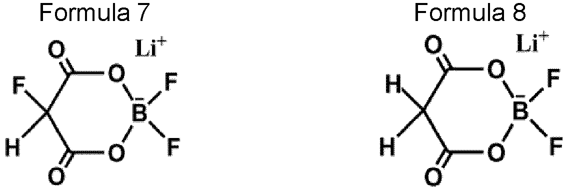 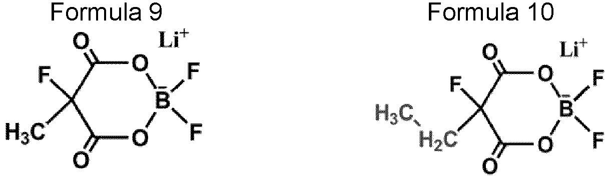 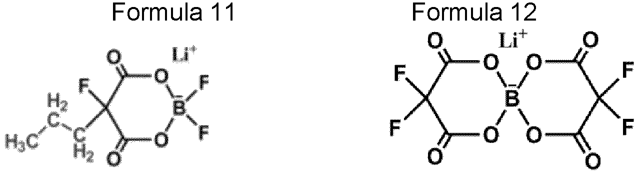 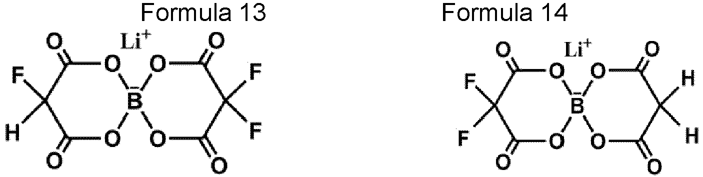 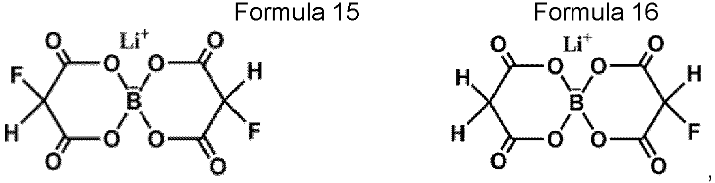 wherein the first lithium salt preferably comprises LiBF₄, and the second lithium salt comprises a compound selected from among compounds represented by Formulae 5 to 16.

10. The gel polymer electrolyte as claimed in any of claims 1 to 9, wherein the liquid electrolyte further comprises a nitrile-based compound, and
the nitrile-based compound comprises at least one selected from among succinonitrile, 1,4-dicyanobutane, 1,6-hexanedinitrile, dicyanobutene, ethyleneglycolbis(propionitrile)ether, hexanetricarbonitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

11. A lithium battery (1), comprising a positive electrode, a negative current collector (21), and an electrolyte layer (30) between the positive electrode (10) and the negative current collector (21),
wherein the electrolyte layer (30) comprises the gel polymer electrolyte as claimed in any of claims 1 to 10, preferably
- further comprising a lithium metal layer (22) between the negative current collector (21) and the electrolyte layer (30), wherein the lithium metal layer (22) comprises a lithium metal foil, lithium metal powder, a lithium alloy foil, lithium alloy powder, or a combination thereof; and/or
- wherein the lithium alloy foil and the lithium alloy powder each comprise lithium and a first metal; and/or
- wherein the lithium alloy foil and the lithium alloy powder each comprise lithium and a first metal,
the first metal being selected from the group comprising indium, silicon, gallium, tin, aluminum, zirconium, niobium, germanium, antimony, bismuth, gold, platinum, palladium, magnesium, silver, zinc, chromium, cesium, sodium, potassium, calcium, yttrium, tantalum, hafnium, barium, vanadium, strontium, lanthanum, or a combination thereof; and/or
- the gel polymer electrolyte has an ionic conductivity of 0.38 mS/cm or more at 25 °C at 1 atm and an ionic conductivity of 0.47 mS/cm or more at 45 °C at 1 atm.

12. The lithium battery (1) as claimed in claim 11, wherein the electrolyte layer (30) comprises a separator, the separator comprising a porous substrate, preferably wherein the porous substrate is a porous film, the porous film being a woven fabric or a non-woven fabric, and
wherein the porous substrate comprises an olefin resin, a fluorine resin, an ester resin, an imide resin, an acrylic resin, a cellulose resin, or a combination thereof,
the olefin resin comprising polyethylene, polypropylene, or a combination thereof,
the fluorine resin comprising polyvinylidene fluoride, polytetrafluoroethylene, or a combination thereof,
the ester resin comprising polyethyleneterephthalate, polybutyleneterephthalate, or a combination thereof,
the imide resin comprising polyamideimide, polyetherimide, or a combination thereof,
the acrylic resin comprising polyacrylonitrile, polyacrylate, or a combination thereof, and
the cellulose resin comprising carboxymethylcellulose, microbial cellulose, plant cellulose, animal cellulose, or a combination thereof.

13. The lithium battery (1) as claimed in claim 11 or 12, wherein the negative current collector (21) comprises copper, nickel, nickel-coated copper, stainless steel, iron, cobalt, or an alloy thereof.

14. The lithium battery (1) as claimed inany of claims 11 to 13, wherein the lithium battery (1) further comprises, between the negative current collector (21) and the electrolyte layer (30), a negative active material layer, a protective layer, or a combination thereof.

15. The lithium battery (1) as claimed in any of claims 11 to 14, wherein the positive electrode (10) comprises a positive current collector (11) and a positive active material layer (12),
at least one of the positive current collector (11) or the negative current collector (21) comprises a base film and a metal layer on a side of the base film,
wherein the base film comprises a polymer, the polymer comprising polyethyleneterephthalate, polyethylene, polypropylene, polybutyleneterephthalate, polyimide, or a combination thereof, and
the metal layer comprises indium, copper, magnesium, stainless steel, titanium, iron, cobalt, nickel, zinc, aluminum, germanium, lithium, or an alloy thereof.
